# EUROPEAN PATENT APPLICATION

(11) **EP 2 187 508 A1**
(43) Date of publication of application: **19.05.2010**
(21) Application number: 08753086.1
(22) Date of filing: 22.05.2008
(51) Int. Cl.: H02K 21/16, H02K 1/22, H02K 1/27, H02K 16/02

(54) **MAGNETIC FLUX DISTRIBUTION CONTROL TYPE ROTARY ELECTRICAL MACHINE SYSTEM**

(30) Priority: 17.08.2007 JP 2007212674; 29.10.2007 JP 2007279975; 04.12.2007 JP 2007313140; 24.01.2008 JP 2008013500; 24.03.2008 JP 2008074809; 28.04.2008 JP 2008116918; 09.05.2008 JP 2008122990
(71) Applicant: Kura Laboratory Corporation, 35-1 Urayanagi-cho Sagashakadomonzen Ukyo-ku Kyoto-shi, Kyoto 6168423 (JP); T.N.G. Technologies Co., Ltd., Kyoto-city, Kyoto 600-8468 (JP)
(72) Inventor: ICHIYAMA, Yoshikazu, Kyoto-shi Kyoto 616-8423 (JP)
(74) Representative: Winter, Brandl, Fürniss, Hübner Röss, Kaiser, Polte Partnerschaft Patent- und Rechtsanwaltskanzlei
(86) International application number: PCT/JP2008/059455
(87) International publication number: WO 2009/025110

(57) **Abstract**

[Purpose] To provide a magnetic flux shunt control type rotary electric machine system having a good energy efficiency in a magnet excited rotary electric machine.

[Solving Means] A magnet excited rotary electric machine system in accordance with the present invention has an excitation portion which collectively excites a magnetic material salient pole to be magnetized to the same polarity, a main magnetic flux path flowing back a magnetic flux from a field magnet via an armature and a bypass magnetic flux path flowing back within the excitation portion are connected to the field magnet within the excitation portion in parallel, and a magnetic flux amount flowing in the main magnetic flux path is controlled by a mechanical displacement. Accordingly, it is possible to achieve a rotary electric machine system which easily controls the magnetic flux amount, and a magnetic flux amount control method. Further, there are proposed a means and a method for reducing force necessary for displacing by regulating magnetic resistance of the magnetic flux path.

## Description

### TECHNICAL FIELD

The present invention relates to a rotary electric machine system including a generator and an electric motor, having a permanent magnet field.

### BACKGROUND ART

A rotary electric machine device such as a generator extracting an electric power electromagnetically generated by a relative rotation between a permanent magnet field and an armature, or an electric motor generating a relative rotation between the permanent magnet field and the armature on the basis of an interaction between a field generated by an electric current fed to the armature and the permanent magnet field is excellent in an energy efficiency, and is widely used routinely with a technical progress of a permanent magnet. However, since the rotary electric machine has a fixed magnetic flux from a field magnet, the rotary electric machine cannot always obtain an optimum output in a wide range of a rotating speed even if it is used as the electric motor or as the generator.

In other words, in the case of the electric motor, a back electromotive force (a generated voltage) results in being too high in a high-speed rotating region, and it becomes hard to control, so that various means for weakening a field intensity have been proposed as field weakening control. Further, in the case of the generator, a constant voltage generator in accordance with field current control or a constant voltage forming circuit of a generated voltage in accordance with a semiconductor is exclusively used for setting the generated voltage to a predetermined level in the wide rotating speed range.

In the electric motor, the field weakening control in accordance with a leading phase current is widely employed; however, an energy loss is enlarged for circulating an electric current which does not contribute directly to the rotation. In the case of using an electric current excitation for control together for a permanent magnet excitation, a structure of the rotary electric machine is complicated, and an energy loss is additionally accompanied. Further, in the case of the generator, there has been a problem that a cost burden of a constant voltage forming electronic circuit is great in a large electric power. Under the environment mentioned above, a strategy devising the structure of the rotary electric machine device so as to minimize the electronic circuit control and reduce the cost as a whole of the device has been demanded, and various proposals have been carried out.

U.S.Pat. No. 3713015 discloses an alternating current generator in which a rotor having a field magnet is divided into two and the two rotors are relatively displaced in a circumferential direction to effectively control a field intensity. Since the relative displacement can be mechanically held, there is an advantage that an energy loss for control is small, however, since a magnetic flux amount flowing into an armature is not changed, there is a disadvantage that an eddy current loss is large in a high-speed rotation region. Japanese Unexamined Patent Publication No. 2004-320864 and Japanese Unexamined Patent Publication No. 2004-328944 disclose a device of controlling a magnetic flux by changing the magnetic resistance of a magnetic circuit including a field magnet. Further, U.S.Pat. No. 4885493, Japanese Unexamined Patent Publication No. 2004-357357 and Japanese Unexamined Patent Publication No. 2006-246662 disclose a device of short-circuit controlling a field magnet. Generally, in the case that a movable portion exists in a magnetic circuit including a magnet, there is a magnetic force intending to displace the movable portion in a direction of enlarging a magnetic flux flowing through the magnetic circuit (a direction of reducing a magnetic resistance). The field magnet is a source for generating a force or generating an electric power in the rotary electric machine device. In a proposed example of the rotary electric machine device of controlling the magnetic resistance of a magnetic circuit or short circuiting the field magnet on the basis of a mechanical displacement, the magnetic force mentioned above is in proportion to the output of the rotary electric machine, and a large force is requested for displacement control and a vibration, a hunting or the like is caused, thereby making precise control hard. Further, an actuator having a large output, a mechanism accompanying an excessive mechanical strength or the like is necessary, and a realization accompanies difficulty.
Patent Document 1: U.S.Pat. No. 3713015
Patent Document 2: U.S.Pat. No. 4885493
Patent Document 3: Japanese Unexamined Patent Publication No. 2004-320864
Patent Document 4: Japanese Unexamined Patent Publication No. 2004-328944
Patent Document 5: Japanese Unexamined Patent Publication No. 2004-357357
Patent Document 6: Japanese Unexamined Patent Publication No. 2006-246662

### DISCLOSURE OF THE INVENTION

### SUBJECT OF THE INVENTION

Accordingly, subject of the present invention is to provide a rotary electric machine system in which magnetic flux amount weakening control is facilitated under the conditions where (1) a risk of demagnetizing a field magnet is small, and (2) a force necessary for a magnetic flux amount control is held down, and a magnetic flux amount control method.

### MEANS FOR ACHIEVING THE SUBJECT

A rotary electric machine system in accordance with the present invention is constructed as follows. It has a surface magnetic pole portion and an armature which are arranged so as to be relatively rotatable, and further has an excitation portion. The armature has an armature coil, the surface magnetic pole portion has a plurality of magnetic material salient poles which are arranged in a circumferential direction so as to be opposed to the armature, and the excitation portion magnetizes a group of magnetic material salient poles to be magnetized to the same kind of polarity in a lump. The excitation portion has a field magnet, makes a main magnetic pole and a bypass magnetic pole be opposed to one magnetic pole of the field magnet, and connects a main magnetic flux path in which a magnetic flux flowing into the main magnetic pole from one magnetic pole of the field magnet flows back to the other magnetic pole via the magnetic material salient pole and the armature, and a bypass magnetic flux path in which a magnetic flux flowing into the bypass magnetic pole from one magnetic pole of the field magnet flows back to the other magnetic pole mainly within the excitation portion to the field magnet in parallel. A movable magnetic pole portion is structured such as to be capable of relatively displacing with respect to the other in such a manner as to change each of an area in which the field magnet is opposed to the main magnetic pole and an area in which the field magnet is opposed to the bypass magnetic pole while keeping a sum of the areas constant on the assumption that any one of a unit of the main magnetic pole and the bypass magnetic pole and the field magnet is set to the movable magnetic pole portion. A magnetic flux amount flowing in the armature is controlled by displacing the movable magnetic pole portion in correspondence to an output of the rotary electric machine system in such a manner as to optimize the output.

In the structure mentioned above, since the main magnetic pole and the bypass magnetic pole are opposed to the field magnet via a micro gap, and the magnetic flux is approximately orthogonal to a boundary surface between them in the vicinity of the field magnet and the magnetic material, the magnetic flux from the field magnet flows into the main magnetic pole and the bypass magnetic pole approximately like a laminar flow, and a magnetic flux amount shunted to the main magnetic pole is in proportion to an opposed area of the main magnetic pole and the field magnet. Further, since the bypass magnetic flux path is connected to the field magnet even if the magnetic flux amount flowing into the main magnetic flux path is changed, it is possible to avoid a risk that the field magnet is demagnetized.

The present invention further makes a proposal of setting to a minimum magnetic force condition that the magnetic resistances of the main magnetic flux path and the bypass magnetic flux path are approximately equal. The magnetic resistance of the bypass magnetic flux path is set so as to have a magnetic resistance regulation portion constructed by a magnetic gap, a narrow portion or the like within the bypass magnetic flux path. Accordingly, since a magnetic flux total amount from the field magnet is kept constant, it is possible to precisely control the magnetic flux amount while making a magnetic force preventing the displacement of the movable magnetic pole portion small. It is possible to achieve success in making the magnetic force preventing the displacement small, only by connecting the bypass magnetic flux path to the field magnet, however, a meaning of "approximately equal" is to set the magnetic resistances of both the magnetic flux paths to the minimum magnetic force condition in such a manner as to hold down the magnetic force preventing the displacement to an output of the actuator used for the displacement or less. The magnetic resistance of the main magnetic flux path fluctuates on the basis of a relative position between the magnetic material salient pole and a magnetic material tooth, however, in the present invention, the magnetic resistance of the main magnetic flux path is set to an averaged value with regard to each of the relative positions between the magnetic material salient poles and the magnetic material teeth.

It is possible to hold down a magnetic flux leakage between both the magnetic flux paths by setting the magnetic resistances of both the magnetic flux paths to the minimum magnetic force condition, and it is possible to hold down the magnetic force preventing the displacement, however, there are a lot of factors which fluctuate the magnetic resistance of the magnetic flux path. In other words, a parts dimension is dispersed within a set tolerance in a mass production stage so as to fluctuate the magnetic resistance of each of the magnetic flux paths, the displaced position of the movable magnetic pole portion affects the magnetic resistance of each of the magnetic flux paths in the case that the magnetic flux leakage between the magnetic flux paths cannot be disregarded, and the magnetic resistance of each of the magnetic flux paths is changed since a magnetic permeability of the magnetic material tends to be affected by a temperature. Further, if the electric current flows through the armature coil, the magnetic resistance of the main magnetic flux path effectively fluctuates. Since the magnetic resistance of each of the magnetic flux paths fluctuates as mentioned above, the magnetic resistances of both the magnetic flux paths are set to the minimum magnetic force condition in a resting state or an average operating condition of the rotor in conformity to a specification of the rotary electric machine system.

In the structure mentioned above, the magnetic flux amount shunted into the main magnetic flux path is in proportion to the opposed area of the main magnetic pole and the field magnet. However, if the magnetic resistance of each of the magnetic flux paths fluctuates and a difference between the magnetic resistances of the magnetic flux paths becomes large, there is a risk that the magnetic flux shunted into the main magnetic pole and the bypass magnetic pole leaks automatically between the magnetic flux paths. In the present invention, there is further proposed such that the magnetic resistance between the main magnetic flux path and the bypass magnetic flux path becomes larger than the difference between the magnetic resistance of the main magnetic flux path and the magnetic resistance of the bypass magnetic flux path, and even in the case that the difference appears between the magnetic resistances of the magnetic flux paths, the short-circuit magnetic flux amount between the magnetic flux paths is held down, whereby it is possible to achieve a precise control of the magnetic flux amount.

In view of the armature coil, the bypass magnetic flux path is the magnetic flux path connected in parallel to the field magnet, and has a chance of short circuiting the magnetic flux generated by the electric current fed to the armature coil to generate a trouble in a motion of the rotary electric machine. In the present invention, there is proposed such that the bypass magnetic flux path including the bypass magnetic pole is structured such as to include a material enlarging an eddy current loss so as to make an alternating current magnetic flux hard to pass through. The alternating current magnetic flux is excited by an electric current fed to the armature coil in correspondence to the positions of the magnetic material salient pole and the magnetic material tooth, or an electric current flowing through the armature coil on the basis of an induced voltage, however, the alternating current magnetic flux is hard to pass through the bypass magnetic flux path on the basis of the structure mentioned above, and it is possible to suppress the effect which the existence of the bypass magnetic flux path gives to the motion of the rotary electric machine.

The present invention further makes a proposal of enabling precise magnetic flux amount control by regulating the magnetic resistance of the main magnetic flux path or the bypass magnetic flux path after manufacturing the rotary electric machine or during the operation so as to make a force necessary for displacing the movable magnetic pole portion small, on the basis of a provision of a magnetic resistance regulating means, and further makes a proposal of acquiring a parameter in connection with the minimum magnetic force condition in a learning manner during the operation. Accordingly, it is possible to make the magnetic force of preventing the displacement of the movable magnetic pole portion small by setting the magnetic resistances of both the magnetic flux paths to the minimum magnetic force condition, in each of the operating states of the rotary magnetic machine or at a time of changing the magnetic flux amount. Further, in the present invention, there is proposed such that the magnetic force appearing by the magnetic resistances of both the magnetic flux paths deflecting from the minimum magnetic force condition is utilized for displacing the movable magnetic pole portion. In other words, in the case of increasing the magnetic flux amount, the magnetic resistance of the main magnetic flux path is made smaller than the magnetic resistance of the bypass magnetic flux path, and in the case of reducing the magnetic flux amount, the magnetic resistance of the magnetic flux path is regulated inversely. As specific means and methods of the magnetic resistance regulation, there is proposed a control of changing a dimension data of a magnetic gap arranged in a part of the magnetic flux path, a control of applying an electric current to a coil wound around the magnetic flux path, and the like. Further, it is possible to employ a method of controlling a magnetic characteristic of the magnetic material by utilizing a temperature, a magnetic saturation or the like.

In accordance with the present invention described above, it is possible to control the magnetic flux amount within the armature by displacing the movable magnetic pole portion, however, various known means can be applied to the means for displacing the movable magnetic pole portion. For example, there are a means for previously setting manually as a pre-set mechanism, a governor mechanism displacing the movable magnetic pole portion by utilizing a centrifugal force, a means having the actuator within the rotor in the case that the field portion exists in the rotor side, a means for displacing on the basis of an external force out of the rotor, and the like.

In the rotary electric machine, there is any of a structure in which the field portion rotates and the armature rests and an inverse structure thereof, a structure in which a cylindrical armature and the field portion are opposed via a gap in a diametrical direction, a structure in which an approximately disc-shaped armature and the field portion are opposed via a gap in an axial direction, and the like. The present invention can be applied to the rotary electric machine of any structures mentioned above of the permanent magnetic excitation. Further, the rotary electric machine is the electric motor if the electric current to the armature coil is set to an input and the rotating force is set to an output, and is the generator if the rotating force is set to an input and the electric current from the armature coil is set to an output. An appropriate magnetic pole structure exists in the electric motor or the generator, however, is reversible, and the rotary electric machine system in accordance with the present invention can be applied to any of the electric motor and the generator.

### EFFECT OF THE INVENTION

In the rotary electric machine system having the field portion of the permanent magnet excitation, the magnetic flux from the field magnet is controlled to be shunted into the main magnetic flux path and the bypass magnetic flux path on the basis of the mechanical displacement, thereby suppressing the magnetic force coming to the trouble of the mechanical displacement, or enabling to control the magnetic flux amount by utilizing the magnetic force. The field weakening control can be easily achieved in the magnetic flux shunt control type rotary electric machine in accordance with the present invention, and it is possible to achieve the rotary electric machine system of appropriately controlling the output at a high energy efficiency.

### BRIEF DESCRIPTION OF THE DRAWINGS

Fig. 1 is a vertical cross sectional view of a rotary electric machine in accordance with a first embodiment of the present invention.
Fig. 2 is a cross sectional view showing an armature and a field portion of the rotary electric machine shown in Fig. 1.
Fig. 3(a) is a plan view including a field magnet as seen from a main magnetic pole and a bypass magnetic pole, and Fig. 3(b) is a plan view including the main magnetic pole and the bypass magnetic pole as seen from a rotor housing side.
Figs. 4(a) and 4(b) are plan views including the main magnetic pole and the bypass magnetic pole as seen from the rotor housing side.
Fig. 5 is a cross sectional view showing a part of a displacement control means of the rotary electric machine shown in Fig. 1.
Fig. 6 is a block diagram of a rotary electric machine system carrying out field weakening control.
Fig. 7 is a vertical cross sectional view of a rotary electric machine in accordance with a second embodiment.
Fig. 8 is a cross sectional view showing an armature and a rotor of therotary electric machine shown in Fig. 7.
Fig. 9 is a vertical cross sectional view showing the rotor and an excitation portion of the rotary electric machine shown in Fig. 7.
Fig. 10 is a cross sectional view showing the excitation portion of the rotary electric machine shown in Fig. 7.
Fig. 11 is a vertical cross sectional view of a rotary electric machine in accordance with a third embodiment.
Fig. 12 is a cross sectional view showing an armature and a rotor of the rotary electric machine shown in Fig. 11.
Fig. 13 is an exploded perspective view showing the rotor and first and second extension portions of the rotary electric machine shown in Fig. 11.
Fig. 14 is an enlarged vertical cross sectional view in the vicinity of a field magnet of the rotary electric machine shown in Fig. 11.
Fig. 15 is a time chart of a rotary electric machine system carrying out field weakening control.
Fig. 16 is a vertical cross sectional view of a rotary electric machine in accordance with a fourth embodiment.
Fig. 17 is a cross sectional view showing an armature and a rotor of the rotary electric machine shown in Fig. 16.
Fig. 18 is an exploded perspective view showing the rotor and first and second extension portions of the rotary electric machine shown in Fig. 16.
Fig. 19 is a vertical cross sectional view of an excitation portion of the rotary electric machine shown in Fig. 16.
Fig. 20 is a cross sectional view of the excitation portion of the rotary electric machine shown in Fig. 16.
Fig. 21 is a perspective view showing a displacing means of the rotary electric machine shown in Fig. 16.
Fig. 22 is a vertical cross sectional view of a rotary electric machine in accordance with a fifth embodiment.
Fig. 23 is a cross sectional view showing an armature and a rotor of the rotary electric machine shown in Fig. 22.
Fig. 24 is an exploded perspective view showing the rotor, a second extension portion and an excitation portion of the rotary electric machine shown in Fig. 22.
Fig. 25 is a vertical cross sectional view showing the rotor and the excitation portion of the rotary electric machine shown in Fig. 22.
Fig. 26 is a cross sectional view showing the excitation portion of the rotary electric machine shown in Fig. 22.
Fig. 27 is a vertical cross sectional view of a rotary electric machine in accordance with a sixth embodiment.
Fig. 28(a) is a plan view of an armature as seen from a surface magnetic pole side, and Fig. 28(b) is a plan view showing a structure of a the surface magnetic pole portion opposed to a magnetic material tooth.
Fig. 29(a) is a plan view of the surface magnetic pole side as seen from a movable magnetic pole portion side, and Fig. 29(b) is a plan view of the movable magnetic pole portion as seen from a cup side.
Fig. 30(a) is a plan view showing a main magnetic pole and a bypass magnetic pole existing at reference positions, and Fig. 30(b) is a plan view showing the main magnetic pole and the bypass magnetic pole which are displaced to the maximum.
Fig. 31 is a block diagram of a rotary electric machine system in accordance with a seventh embodiment.
Fig. 32 shows a model magnetic circuit showing a main magnetic flux path connected to a field magnet and a bypass magnetic flux path.

### BEST MODE FOR CARRYING OUT THE INVENTION

A description will be given below of a rotary electric machine system in accordance with embodiments of the present invention with reference to the accompanying drawings.

### Embodiment 1

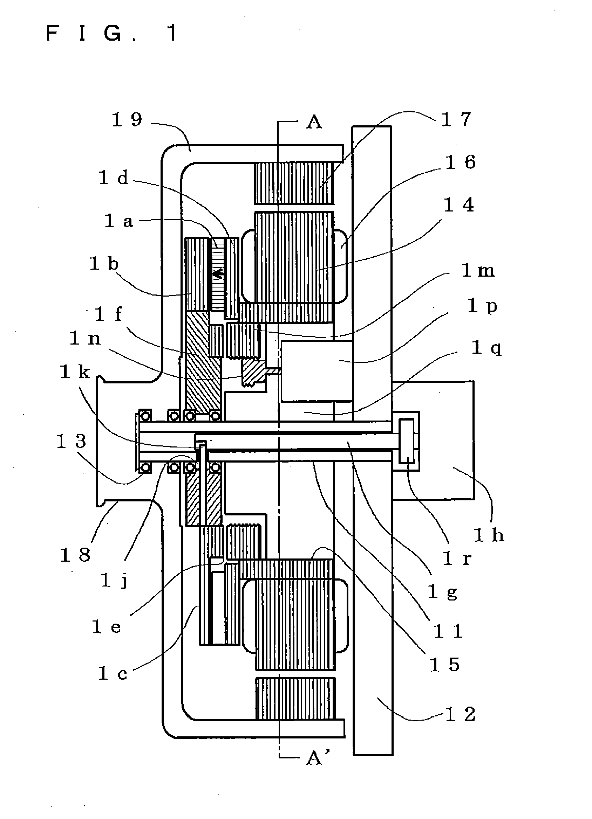

A description will be given of a rotary electric machine system in accordance with a first embodiment of the present invention with reference to Figs. 1 to 6. The first embodiment is a rotary electric machine system having a single-pole rotor of a radial gap structure and an outer rotor structure. The excitation portion is arranged in a rest side of the rotary electric machine so as to be adjacent to an armature in an axial direction, and has a magnetic resistance regulating means of a bypass magnetic flux path.

Fig. 1 shows an embodiment in which the present invention is applied to the rotary electric machine of the outer rotor structure, a magnetic material salient pole is arranged in a rotor, and an armature is arranged in a fixed shaft. The fixed shaft 11 is fixed to a base plate 12, the armature is fixed to the fixed shaft 11, and a magnetic material salient pole 17 is arranged in an iron rotor housing 19 corresponding to a magnetic material which is rotatably supported to the fixed shaft 11 via a bearing 13.

The armature is constructed by a cylindrical magnetic yoke 15 fixed to the fixed shaft 11, a plurality of magnetic material teeth 14 extending in a diametrical direction from the cylindrical magnetic yoke 15, and an armature coil 16 wound around the magnetic material tooth 14. The rotor housing 19 of the rotor has a pulley portion 18 for transmitting a rotating force to an external device, and a magnetic material salient pole 17 and a magnetic gap portion are alternately arranged in a circumferential direction in the rotor housing 19 so as to be opposed to the magnetic material tooth 14.

An excitation portion magnetizing the magnetic material salient pole 17 goes around the fixed shaft 11 and is arranged so as to be arranged side by side with the armature, a substantial part thereof is constructed by a field magnet 1a, a main magnetic pole 1b, a bypass magnetic pole 1d and a base magnetic pole 1c, the main magnetic pole 1b and the bypass magnetic pole 1c are supported to an excitation portion support 1f, and the excitation portion support 1f is rotatably supported to the fixed shaft 11. An arrow within the field magnet 1a indicates a direction of magnetization, and reference symbol 1e denotes a gap between an extension portion of the bypass magnetic pole 1c and a movable base magnetic pole 1m. A gap length regulating means of the gap 1e is constructed by a movable base magnetic pole 1m, a base magnetic pole regulating screw 1n provided in an armature support portion 1q, and an actuator 1p.

The fixed shaft 11 is formed as a hollow construction, and has a control rod 1g which is slidably arranged within a hollow portion, and the control rod 1g is structured such as to be displaced in a circumferential direction by an actuator 1h. The fixed shaft 11 is provided with a slit portion 1j passing through the hollow portion, and a pin 1k fixed to the excitation portion support 1f via the slit portion 1j is engaged with the control rod 1g so as to rotationally displace the excitation portion support 1f, the main magnetic pole 1b and the bypass magnetic pole 1c on the basis of a rotational displacement of the control rod 1g. Reference symbol 1r denotes a torque sensor.

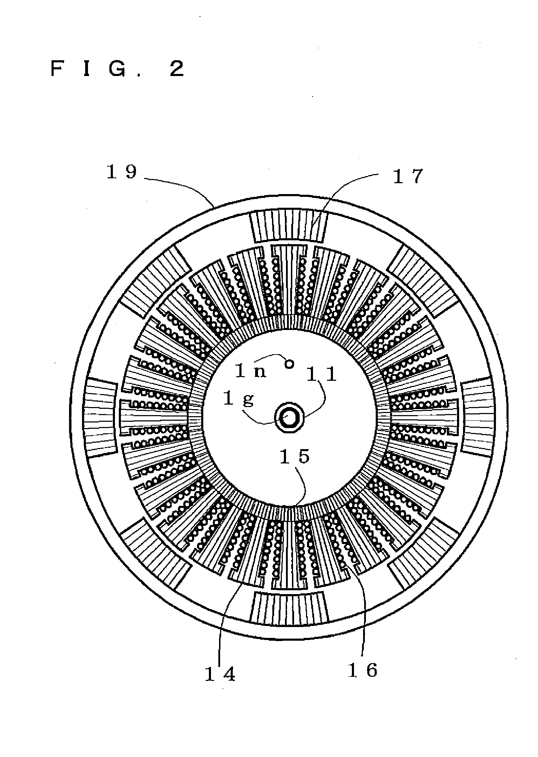

Fig. 2 shows a cross sectional view of an armature and a rotor along a line A-A' in Fig. 1, and is shown by attaching reference numerals to a part of constructing portions for explaining a mutual relationship. The armature is constructed by a cylindrical magnetic yoke 15 fixed to the armature support 1q, a plurality of magnetic material teeth 14 extending in a diametrical direction from the cylindrical magnetic yoke 15 and having a magnetic gap in a circumferential direction, and an armature coil 16 wound around the magnetic material tooth 14. In the first embodiment, it is constructed by twenty four armature coils 16, and they are connected in three phases. The magnetic material tooth 14 and the cylindrical magnetic yoke 15 are constructed by being punched out from a silicone steel plate by a predetermined mold, and thereafter being laminated, and the armature coil 16 is wound around them.

In Fig. 2, the rotor is structured such that eight magnetic material salient poles 17 in which the silicone steel plates are laminated so as to be opposed to the magnetic material tooth 14 are arranged in an inner side of the rotor housing 19 at an equal interval in a circumferential direction. A magnetic gap portion is formed between the magnetic material salient poles 17, and a simple gap is constructed, however, at a time when a windage loss works against an energy efficiency or a sound generation at a high speed rotation, it is possible to arrange a resin or the like having a high specific resistance and being non-magnetic. The field magnet is not arranged in the rotor, however, the magnetic material salient pole 17 is magnetically connected to one magnetic pole of the field magnet 1a and the magnetic material tooth 14 is magnetically connected to the other magnetic pole by the excitation portion so as to be magnetized. The structure mentioned above is the rotary electric machine having the single pole, and is hard to be used as an electric motor or a generator, however, has an advantage that the construction is simple.

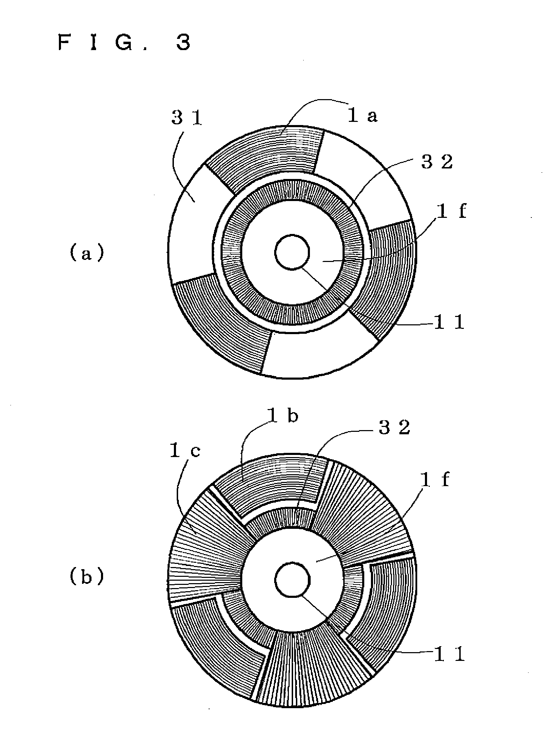

Fig. 3 is a view for explaining a structure of the excitation portion shown in Fig. 1 and a principle of a magnetic flux amount control. Fig. 3(a) is a plan view including the field magnet 1a as seen from the main magnetic pole 1b and the bypass magnetic pole 1c side, and Fig. 3(b) is a plan view including the main magnetic pole 1b and the bypass magnetic pole 1c as seen from the rotor housing 19 side. In Figs. 1 and 3(a), three field magnets 1a are arranged in a circumferential direction while holding a magnetic gap portion 31 therebetween. A magnetization direction of each of the field magnets 1a is an axial direction as shown by an arrow in Fig. 1, two magnetic poles of the field magnet 1a are set to a first field magnetic pole and a second field magnetic pole, the second field magnetic pole is connected to a cylindrical magnetic yoke 15 via the base magnetic pole 1d, and the first field magnetic pole is magnetically connected to the rotor housing 19 via the opposed main magnetic pole 1b.

As shown in Figs. 1 and 3(b), the main magnetic poles 1b and the bypass magnetic poles 1c are rotatably arranged in the first field magnetic pole of the field magnet 1a side by side in the circumferential direction so as to be opposed to the first field magnetic pole of the field magnet 1a via a micro gap. In Figs. 3(a) and 3(b), a cylindrical magnetic core denoted by reference numeral 32 is connected to the bypass magnetic pole 1c so as to be rotationally displaced together, and is connected to the base magnetic pole 1d via the gap 1e, the movable base magnetic pole 1m and the cylindrical magnetic yoke 15 as shown in Fig. 1. The movable base magnetic pole 1m is slid along the cylindrical magnetic yoke 15 on the basis of a rotation of the base magnetic pole regulating screw In.

The magnetic flux flowing into the main magnetic pole 1b from the first field magnetic pole of the field magnet 1a forms a main magnetic flux path flowing back to the second field magnetic pole via the rotor housing 19, the magnetic material salient pole 17, the magnetic material tooth 14, the cylindrical magnetic yoke 15, and the base magnetic pole 1d, and a magnetic flux flowing into the bypass magnetic pole 1c forms a bypass magnetic flux path flowing back to the second field magnetic pole via the cylindrical magnetic core 32, the gap 1e, the movable base magnetic pole 1m, the cylindrical magnetic yoke 15, and the base magnetic pole 1d. A magnetic resistance of the main magnetic flux path and a magnetic resistance of the bypass magnetic flux path are set to be approximately equal to each other on the assumption that an opposed area and a gap length of the gap 1e are set to a magnetic resistance regulating portion. At this time, since the magnetic resistance of the main magnetic flux path fluctuates in accordance with a relative position between the magnetic material salient pole 17 and the magnetic material tooth 14, the magnetic resistance of the bypass magnetic flux path is set to be approximately equal to an averaged magnetic resistance.

The main magnetic pole 1b, the bypass magnetic pole 1c, the cylindrical magnetic core 32, the base magnetic pole 1d, and the movable base magnetic pole 1m are constructed by a magnetic material mainly constituted by a soft iron block having a great saturation magnetic flux density so as to make an alternating current magnetic flux hard to flow, and are constructed compact as a whole. In order to construct the magnetic resistance between the field magnet 1a, and the main magnetic pole 1b and the bypass magnetic pole 1c small, the field magnet 1a, and the main magnetic pole 1b and the bypass magnetic pole 1c are structured such as to be opposed therebetween via a micro gap, or the field magnet 1a, and the main magnetic pole 1b and the bypass magnetic pole 1c are structured such as to be slid therebetween.

In Figs. 3(a) and 3(b), angle lengths in the circumferential direction of the main magnetic pole 1b and the bypass magnetic pole 1c are set to be equal, an angle length in the circumferential direction of the field magnet 1a is set to be equal to a sum of an angle length in the circumferential direction of a gap between the main magnetic pole 1b and the bypass magnetic pole 1c and an angle length in the circumferential direction of the main magnetic pole 1b, and an amount of displacement of the main magnetic pole 1b and the bypass magnetic pole 1c is set to be equal to or less than the angle length in the circumferential direction of the main magnetic pole 1b. In the present embodiment, the main magnetic pole 1b and the bypass magnetic pole 1c correspond to a movable magnetic pole portion, and are formed as a magnetic pole unit so as to be displaced to the field magnet 1a.

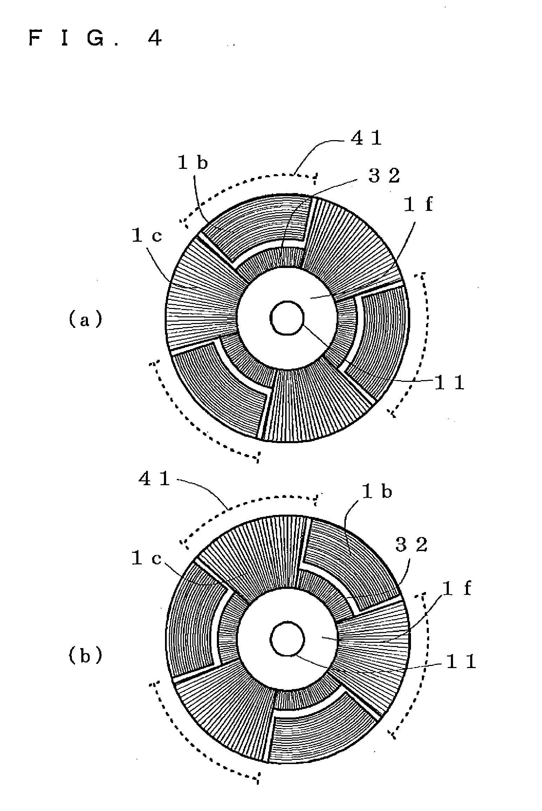

Figs. 4(a) and 4(b) are plan views showing the main magnetic pole 1b and the bypass magnetic pole 1c as seen from the rotor housing 19 side in the same manner as Fig. 3(b), and respectively show cases that the displacement in the circumferential direction between the magnetic pole unit (the main magnetic pole 1b and the bypass magnetic pole 1c) and the field magnet 1a is minimum and maximum, that is, cases that the magnetic flux amount between the magnetic material salient pole 17 and the magnetic material tooth 14 is made maximum and minimum, respectively. In the drawings, reference numeral 41 denotes a region in which the field magnet 1a exists in the circumferential direction, and shows a state in which the field magnet 1a is opposed to a whole region of the main magnetic pole 1b at a reference position and is opposed to the bypass magnetic pole 1c slightly as shown in Fig. 4(a). In this case, approximately a whole amount of the magnetic flux from the field magnet 1a flows between the magnetic material salient pole 17 and the magnetic material tooth 14 via the main magnetic pole 1b.

Fig. 4(b) shows a case that the magnetic pole unit rotationally displaces in a clockwise direction equally to an angle length in the circumferential direction of the main magnetic pole 1b from the reference position shown in Fig. 4(a), and shows a state in which the field magnet 1a is opposed to a whole region of the bypass magnetic pole 1c and is opposed to the main magnetic pole 1b slightly. In this case, approximately a whole amount of the magnetic flux from the field magnet 1a flows back to the second field magnetic pole via the bypass magnetic pole 1c and via the cylindrical magnetic core 32, the gap 1e, the movable base magnetic pole 1m, the cylindrical magnetic yoke 15, and the base magnetic pole 1d.

In an intermediate state in the case shown in Figs. 4(a) and 4(b), the field magnet 1a is opposed to both the main magnetic pole 1b and the bypass magnetic pole 1c, and the magnetic flux from the field magnet 1a is shunted to the main magnetic flux path and the bypass magnetic flux path. Since the field magnet 1a is opposed to the main magnetic pole 1b and the bypass magnetic pole 1c via a micro gap approximately at a whole width, and the magnetic flux flows orthogonally to the surface of the field magnet 1a, the main magnetic pole 1b and the bypass magnetic pole 1c, the magnetic flux flows like a laminar flow between the field magnet 1a, and the main magnetic pole 1b and the bypass magnetic pole 1c. Accordingly, the magnetic flux is shunted in proportion to each of opposed areas between the field magnet 1a, and the main magnetic pole 1b and the bypass magnetic pole 1c. Further, a sum of the opposed areas between the field magnet 1a, and the main magnetic pole 1b and the bypass magnetic pole 1c is constant, and the areas are changed in accordance with the displacement of the magnetic pole unit. Since the magnetic resistances of the main magnetic flux path and the bypass magnetic flux path are set to be approximately equal, and a total amount of the magnetic flux from the field magnet 1a is always constant, a magnetic force preventing the displacement of the magnetic pole unit does not appear in a theoretical sense.

If the position of the magnetic pole unit stays within a range shown in Figs. 4(a) and 4(b), a sum of the opposed areas between the field magnet 1a, and the main magnetic pole 1b and the bypass magnetic pole 1c is constant, these areas are changed in accordance with the displacement, and the magnetic flux amount shunted to the main magnetic flux path is approximately in parallel to the displacement amount. Even if the position goes beyond the range, it is possible to carry out the magnetic flux control, however, a relationship between the displacement amount and the magnetic flux amount flowing in the main magnetic flux path becomes unfixed. In the present embodiment, a position in the circumferential direction and an angle length in the circumferential direction of the slit 1j are set in such a manner as to stay the position of the magnetic pole unit within the range.

Generally, in the case that the movable portion is provided in a part of the magnetic circuit including the magnet, there appears a magnetic force intending to move the movable portion in a direction of enlarging the magnetic flux amount (which is the same meaning as a direction of reducing the magnetic resistance of the magnetic circuit). Prior to the present invention, for the purpose of controlling the magnetic flux, there have been a lot of proposals which intend to short circuit the field magnet by displacing a part of the magnetic circuit or intend to change the magnetic resistance of the magnetic flux path. However, the field magnet is a source for generating a magnet torque or an electric power in the rotary electric machine, has a great magnetic force preventing the displacement, and makes a precise magnetic flux amount control hard. The magnetic force can be held down on the basis of the structure in accordance with the present invention, and it is possible to carry out a precise magnetic flux amount control.

In the present embodiment, the field magnet 1a is opposed to the main magnetic pole 1b and the bypass magnetic pole 1c via the micro gap. It is hard to structure the magnetic resistances of the main magnetic flux path and the bypass magnetic flux path such as to be exactly equal, and if the field magnet 1a is opposed to the main magnetic pole 1b and the bypass magnetic pole 1c via the magnetic material in the case that the magnetic resistances of the both have a difference, the magnetic flux from the field magnet 1a is shunted within the magnetic material in correspondence to the magnetic resistances of the respective magnetic flux paths, and the magnetic flux flowing in the main magnetic flux path becomes not in proportion to the opposed area between the field magnet 1a and the main magnetic pole 1b, so that it becomes hard to control the magnetic flux amount. In the case that the field magnet 1a is opposed to the main magnetic pole 1b and the bypass magnetic pole 1c via the magnetic material due to a structural constraint, the structure is made such that the magnetic flux is hard to be shunted within the magnetic material by setting the magnetic material to a magnetic material having a strong anisotropy or a magnetic material having a small thickness. This structure is included in a scope of the present invention in a point that the magnetic flux is substantially shunted in an end surface of the field magnet 1a.

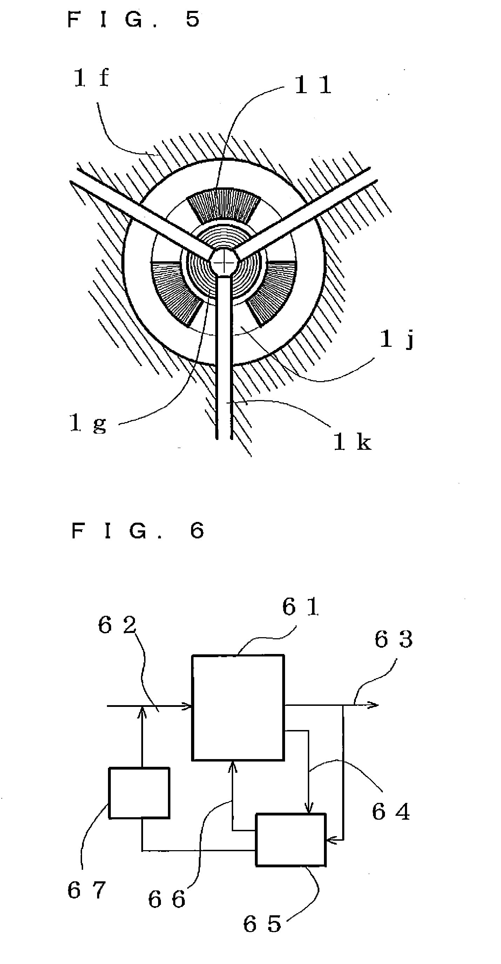

The description is given of the fact that it is possible to control the magnetic flux amount flowing between the magnetic material salient pole 17 and the magnetic material tooth 14 by displacing the magnetic pole unit, and the magnetic force preventing the displacement at that time is not generated in a theoretical sense. The description will be given below of a structure displacing the magnetic pole unit with reference to Figs. 1 to 5. Fig. 5 is a cross sectional view showing an enlarged manner a portion in which the pin 1k fixed to the excitation portion support 1f is engaged with the control rod 1g. The structure is made such that three pins 1k are provided, the slit 1j is provided in the fixed shaft 11, and three groove portions respectively receiving the pins 1k are provided in the end surface of the control rod 1g. The pin 1k is engaged with the groove portion in the end portion of the control rod 1g by inserting the fixed shaft 11 to the excitation portion support 1f, thereafter striking the pin 1k from an outer circumferential portion of the excitation portion support 1f, protruding the pin 1k to the hollow portion within the fixed shaft 11 so as to fix, and inserting the control rod 1g to the hollow portion of the fixed shaft 11.

The actuator 1h rotatably displaces the control rod 1g on the basis of an instruction from the control device, and rotatably displaces the excitation portion support 1f via the pin 1k. At that time, a position in a circumferential direction and an angle length in the circumferential direction of the slit 1j are set as a displacement regulating means keeping the magnetic pole unit in a displacement amount within a range shown by Figs. 4(a) and 4(b). The actuator 1h is structured such as to store the displacement position of the magnetic pole unit by using a step motor, however, may be structured such that the displacement position can be stored by additionally combining a motor and a screw mechanism or a gear mechanism.

It is possible to hold down the magnetic flux leakage between both the magnetic flux paths by setting the magnetic resistances of the main magnetic flux path and the bypass magnetic flux path to the minimum magnetic force condition, and it is possible to hold down the magnetic force preventing the displacement, however, there are a lot of factors fluctuating the magnetic resistance of the magnetic flux path. In other words, parts dimensions disperse within a tolerance in a mass production stage so as to fluctuate the magnetic resistances of the respective magnetic flux paths, and since a displaced position of the movable magnetic pole portion affects the magnetic resistance of each of the magnetic flux paths in the case that the magnetic flux leakage between the magnetic flux paths can not be disregarded, and a magnetic permeability of the magnetic material tends to be affected by a temperature, the magnetic resistance of each of the magnetic flux paths is changed. Further, if an electric current is circulated in the armature coil, the magnetic resistance of the main magnetic flux path effectively fluctuates. In the present embodiment, the magnetic flux amount is carried out by regulating a magnitude of the gap 1e within the bypass magnetic flux path so as to equalize the magnetic resistances of the main magnetic flux path and the bypass magnetic flux path, and making the magnetic force preventing the displacement of the magnetic pole unit small. A parameter of a gap length regulating means regulating the magnitude of the gap 1e is adapted as a structure acquiring in a learning manner during the operation of the rotary electric machine to the magnetic resistance change of the magnetic flux path due to various causes.

A description will be given of a structure and a method for regulating the magnitude of the gap 1e in a learning manner for regulating the magnetic resistance of the bypass magnetic flux path with reference to Fig. 1. In Fig. 1, reference symbol 1r denotes a torque sensor. A torque sensor on the basis of various principles can be used as the torque sensor 1r, however, a strain gauge is compact and is suitable for the present embodiment. If the magnitude of the gap 1e is changed by rotating the base magnetic pole regulating screw 1n by the actuator 1p so as to move the base magnetic pole 1m forward and backward in an axial direction, the magnetic pole unit is exposed to a magnetic force displacing in a direction of increasing an opposed area between the magnetic pole (the main magnetic pole 1b or the bypass magnetic pole 1c) having the smaller magnetic resistance and the field magnet 1a in correspondence to the magnetic resistance difference between the main magnetic flux path and the bypass magnetic flux path. Since the actuator 1h intends to keep the position in the circumferential direction, the control rod 1g is twisted and the magnetic force can be detected by the torque sensor 1r.

Since the change of the magnitude of the gap 1e by the actuator 1p does not directly affect the rotating motion of the rotary electric machine, the control device appropriately changes the magnitude of the gap 1e by the actuator 1p during a normal rotating motion so as to monitor the output of the torque sensor 1r, and maintains the magnitude of the gap 1e at a point in which the magnetic force becomes smaller. Since it is close to the minimum magnetic force condition and the magnetic force is held down, it is possible to control the magnetic flux amount by the actuator 1h having a small output.

The description will be given above of the matter that the magnetic flux amount flowing in the armature can be controlled by relatively displacing the magnetic pole unit with respect to the field magnet 1a in the rotary electric machine shown in Figs. 1 to 5, and the description is further given of the means and method for displacing the magnetic pole unit with respect to the field magnet 1a. The first embodiment relates to a system for optimizing the output by controlling the magnetic flux amount, and a description will be given of a control serving as the rotary electric machine system with reference to Fig. 6. Fig. 6 shows a block diagram of the rotary electric machine system carrying out the magnetic flux amount control. In Fig. 6, a rotary electric machine 61 is assumed to have an input 62 and an output 63, and a control device 65 controls a magnetic flux amount via a control signal 66 by using a state signal 64 including an output 63 of the rotary electric machine 61 and positions of a main magnetic pole 1b and a bypass magnetic pole 1c as an input. Reference numeral 67 denotes a drive control circuit of the armature coil 16. If the rotary electric machine 61 is used as a generator, the input 62 is a rotating force, and the output 63 comes to a generated power. If the rotary electric machine 61 is used as an electric motor, the input 62 is a drive current fed to the armature coil 16 from the drive control circuit 67, and the output 63 comes to a rotating torque and a rotating speed.

A description will be given of an electric motor system appropriately controlling a rotating force by carrying out field weakening control, in the case that the rotary electric machine is used as the electric motor. When the rotating speed corresponding to the output 63 becomes larger than a predetermined value so as to make a magnetic flux amount flowing in the armature small, the control device 65 displaces the magnetic unit via the control signal 66, the actuator 1h and the control rod 1g in a clockwise direction in Figs. 4(a) and 4(b), and makes the opposed area between the main magnetic pole 1b and the field magnet 1a small. When the rotating speed becomes smaller than a predetermined value so as to make the magnetic flux amount flowing in the armature large, the magnetic pole unit is displaced in a counterclockwise direction via the control signal 66, the actuator 1h and the control rod 1g, and the opposed area between the main magnetic pole 1b and the field magnet 1a is enlarged.

A description will be given of a constant voltage power generating system controlling a generated voltage to a predetermined voltage by carrying out field weakening control, in the case that the rotary electric machine is used as the generator. When the generated voltage corresponding to the output 63 becomes larger than a predetermined value so as to make the magnetic flux amount flowing in the armature small, the control device 65 displaces the magnetic pole unit in a clockwise direction in Figs. 4(a) and 4(b) via the control signal 66, the actuator 1h and the control rod 1g, and makes the opposed area between the main magnetic pole 1b and the field magnet 1a small. When the generated voltage becomes smaller than the predetermined value so as to make the magnetic flux flowing in the armature large, the magnetic pole unit is displaced in a counterclockwise direction via the control signal 66, the actuator 1h and the control rod 1g, and the opposed area between the main magnetic pole 1b and the field magnet 1a is enlarged.

In the case of continuously carrying out the control in such a manner as to set the magnetic resistances of the main magnetic flux path and the bypass magnetic flux path to the minimum magnetic force condition in the magnetic resistance regulating means employed in the present embodiment, it is possible to keep a force necessary for displacing the movable magnetic pole portion without interrupting the operation of the rotary electric machine for controlling the magnetic flux amount, and it is further possible to keep a magnetic leakage between both the magnetic flux paths small.

In the case that it is possible to keep the magnetic resistance of the magnetic flux path within an allowable range from a design value, it is possible to make the magnetic resistance regulation of the bypass magnetic flux path after assembling the rotary electric machine unnecessary. Further, in the case that the magnetic resistance of the magnetic flux path during the operation does not deflected largely from the initial state, it is possible to employ only the initial regulation setting after assembling the rotary electric machine and it is possible to omit the learning process employed in the present embodiment. It is possible to obtain an optimum rotary electric machine system by partly employing the magnetic resistance regulating means of the bypass magnetic flux path in the present embodiment in accordance with a specification or an operating condition of the rotary electric machine system.

### Embodiment 2

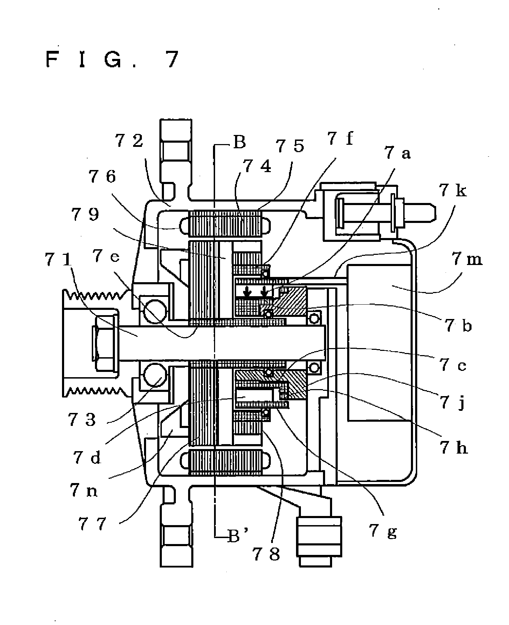

A description will be given of a rotary electric machine system in accordance with a second embodiment of the present invention with reference to Figs. 7 to 10. The second embodiment is the rotary electric machine system in which two rotors alternately having a magnetic material salient pole and a magnetic gap portion are arranged in parallel in an axial direction, and an excitation portion is arranged in a housing side. Further, the second embodiment effectively regulates a magnetic resistance of a main magnetic flux path by feeding an electric current under a predetermined condition to an armature coil at a time of controlling a magnetic flux amount so as to drive a rotor in an accelerating or decelerating direction, and generates a magnetic force assisting the displacement.

Fig. 7 shows an embodiment in which the present invention is applied to a rotary electric machine of a radial gap structure, and a rotating shaft 71 is rotatably supported to a housing 72 via a bearing 73. An armature is constructed by a cylindrical magnetic yoke 75 fixed to the housing 72, a plurality of magnetic material teeth 74 extending in a diametrical direction from the cylindrical magnetic yoke 75, and an armature coil 76 wound around the magnetic material tooth 74. In a surface magnetic pole portion of a rotor, surface magnetic pole portions 77 and 78 of two rotors in which a magnetic material salient pole and a magnetic gap portion are alternately arranged in a circumferential direction are arranged side by side in an axial direction so as to hold a non-magnetic material disc 79 therebetween.

The excitation portion magnetizing the magnetic material salient poles of the surface magnetic pole portions 77 and 78 of two rotors is arranged in the housing 72 side, and a major portion is constructed by a field magnet 7a, a main magnetic pole 7b and a bypass magnetic pole 7c. The main magnetic pole 7b and the bypass magnetic pole 7c are fixed to an excitation portion support 7j, and the excitation portion support 7j is fixed to the housing 72. The field magnet 7a and the field magnet support 7g are structured as a movable magnetic pole portion so as to be slidable in a circumferential direction with respect to the main magnetic pole 7b and the bypass magnetic pole 7c and are connected to an actuator 7m via a control rod 7k. An arrow within the field magnet 7a denotes a magnetization direction, and reference symbol 7n denotes a cooling fan fixed to the rotor.

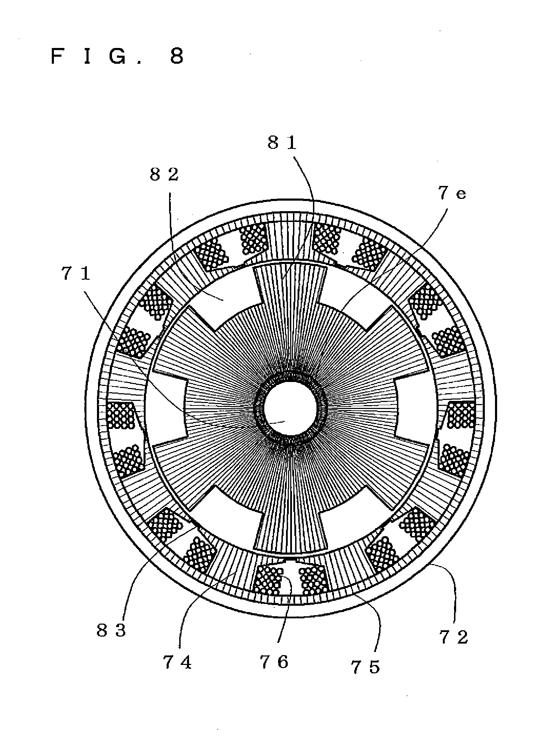

Fig. 8 shows a cross sectional view of the armature and the rotor along a line B-B' in Fig. 7, and is shown by attaching reference numerals to a part of constructing portions for explaining a mutual relationship. The armature is constructed by the cylindrical magnetic yoke 75 fixed to the housing 72, a plurality of magnetic material teeth 74 extending in a diametrical direction from the cylindrical magnetic yoke 75 and having a magnetic gap in a circumferential direction, and the armature coil 76 wound around the magnetic material tooth 74. In the present embodiment, it is constructed by nine armature coils 76, and they are connected in three phases. A leading end of the magnetic material tooth 74 of the armature is provided with a saturable magnetic material connection portion 83 which is shorter in a diametrical direction between the leading end portions of the adjacent magnetic material teeth 74. The magnetic material tooth 74 and the saturable magnetic material connection portion 83 are laminated by punching a silicone steel plate by a mold, thereafter wind the armature coil 76, and are combined with the cylindrical magnetic yoke 75 so as to form the armature.

The saturable magnetic material connection portion 83 improves a support strength of the magnetic material tooth 74 by being integrated with the magnetic material tooth 74, and suppresses an unnecessary vibration of the magnetic material tooth 74. Since a length in a diametrical direction of the saturable magnetic material connection portion 83 is set short so as to be formed as an easily magnetically saturated shape, it is easily saturated by a magnetic flux generated by the armature coil 76 or a magnetic flux from the field magnet, and sets a short circuit of the magnetic flux generated by the armature coil 76 and the magnetic flux in this case to a slight amount. If the electric current is fed to the armature coil 76, the saturable magnetic material connection portion 83 is magnetically saturated together with time so as to leak the magnetic flux to the circumference, however, since a boundary of an effective magnetic gap appearing in the magnetically saturated saturable magnetic material connection portion 83 is not clear, a shunt of the leaking magnetic flux becomes slow, and the saturable magnetic material connection portion 83 loosens a time change of the force applied to the magnetic material tooth 74 in this regard so as to contribute to the vibration suppression.

In Fig. 8, the rotor is structured such as to have a magnetic material salient pole 81 and a magnetic gap portion 82 alternately in a circumferential direction, and is constructed by punching a silicone steel plate by a predetermined mold. The surface magnetic pole portions 77 and 78 of two rotors have the same structure, and are arranged such that the magnetic material salient pole 81 of the surface magnetic pole portion 77 of one rotor is opposed in an axial direction to the magnetic gap portion 82 of the surface magnetic pole portion 78 of the other rotor. The magnetic gap portion 82 is formed between the magnetic material salient poles 81, and is simply constructed as a gap, however, when a windage loss works against an energy efficiency or a sound generation in a high speed rotation, it is possible to construct by a resin having a large specific resistance and being non-magnetic.

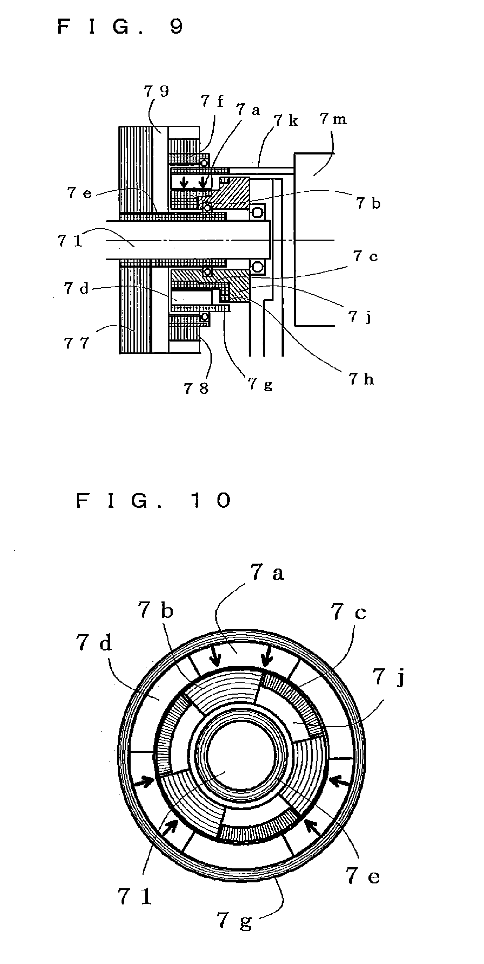

Fig. 9 shows in an enlarged manner the rotor and the excitation portion in which the vertical cross sectional view is shown in Fig. 7, and Fig. 10 shows a cross sectional view of the excitation portion. A description will be given of a structure of the excitation portion and a motion principle of the magnetic flux amount control with reference to Figs. 7, 9 and 10. A major portion of the excitation portion is constructed by the field magnet 7a, the main magnetic pole 7b and the bypass magnetic pole 7c. Three field magnets 7a each having a magnetization in a diametrical direction are provided, and are fixed to an inner side of a field magnet support 7g which alternately arranges the field magnets 7a and non-magnetic materials 7d and is constructed by a cylindrical magnetic material. A pair of the main magnetic pole 7b and the bypass magnetic pole 7c are arranged in an inner side so as to be opposed to each of the field magnets 7a and are fixed to the excitation portion support 7j. The bypass magnetic pole 7c is further connected to an annular magnetic core 7h, and the annular magnetic core 7h is opposed to the field magnet support 7g via a gap.

The cylindrical magnetic core 7e fixed to the rotating shaft 71 and constructed by a cylindrical magnetic material is connected to the surface magnetic pole portion 77 and is opposed to the main magnetic pole 7b via a micro gap, and the cylindrical magnetic core 7f fixed to the surface magnetic pole portion 78 and constructed by a cylindrical magnetic material is opposed to the field magnet support 7g via a micro gap. The main magnetic pole 7b constructing the excitation portion, the bypass magnetic pole 7c, the field magnet support 7g, the annular magnetic core 7h, the cylindrical magnetic core 7e, and the cylindrical magnetic core 7f are constructed by a soft iron having a large saturation magnetic flux density and is constructed compact as a whole in such a manner as to make an alternating current magnetic flux hard to pass therethrough.

The structure of the excitation portion is similar while a magnetization direction of the field magnet 7a and a point in which the field magnet 7a is opposed to the main magnetic pole 7b and the bypass magnetic pole 7c in the diametrical direction are only different from the first embodiment. In the present embodiment, the field magnet 7a is structured such as to slide in a circumferential direction with respect to the main magnetic pole 7b and the bypass magnetic pole 7c so as to be displaced by the actuator 7m. The actuator 7m connects the field magnet 7a and the field magnet support 7g by three control rods 7k via a window provided in the housing 72 so as to rotationally displace, and changes the opposed area between the field magnet 7a and the main magnetic pole 7b.

The structure is made such that a main magnetic flux path in which a magnetic flux flowing into the main magnetic pole 7b from one magnetic pole of the field magnet 7a flows back to the other magnetic pole of the field magnet 7a via the cylindrical magnetic core 7e, the magnetic material salient pole 81 of the surface magnetic pole portion 77, the magnetic material tooth 74, the magnetic material salient pole 81 of the surface magnetic pole portion 78, the cylindrical magnetic core 7f and the field magnet support 7g, and a bypass magnetic flux path in which a magnetic flux flowing into the bypass magnetic pole 7c from one magnetic pole of the field magnet 7a flows back to the other magnetic pole of the field magnet 7a via the annular magnetic core 7h and the field magnet support 7g are connected to the field magnet 7a in parallel, the magnetic flux is shunted into the main magnetic flux path and the bypass magnetic flux path in accordance with the displacement in the circumferential direction of the field magnet 7a, and the magnetic flux amount flowing in the main magnetic flux path is controlled.

In the present embodiment, the magnetic resistance of the main magnetic flux path is set to be approximately equal to the magnetic resistance of the bypass magnetic flux path so as to make a force necessary for displacing the field magnet 7a small. The magnetic resistance of the bypass magnetic flux path is set to become equal to the magnetic resistance of the main magnetic flux path by using a gap length and an opposed area between the annular magnetic core 7h and the field magnet support 7g as a magnetic resistance regulating portion.

In the present embodiment, a step motor is used as the actuator 7m, and the field magnet 7a is displaced via the control rod 7k. In the case that the drive current is not applied to the actuator 7m, a position of the field magnet 7a is stored and an energy necessary for the control is made small.

The magnetic resistance of each of the magnetic flux paths fluctuates due to various factors, however, the magnetic flux amount control is intermittently carried out during the operation of the rotary electric machine. In the case of using the rotary electric machine as an electric motor and feeding an electric current in a direction of accelerating the rotor to the armature coil, the magnetic flux is pulled in so as to make the magnetic flux amount flowing in the armature large, and in the case of driving the rotor in a decelerating manner, inversely operated. Accordingly, in the case of driving the rotor in the accelerating manner or the decelerating manner, the magnetic resistance of the main magnetic flux path becomes effectively small and large, respectively. The displacement control is executed as follows by setting the electric current fed to the armature coil in such a manner as to equalize the magnetic resistances of the main magnetic flux path and the bypass magnetic flux path to a minimum magnetic force current. In other words, in the case of increasing the magnetic flux amount flowing in the main magnetic flux path, an electric current which is shifted at a predetermined amount from the minimum magnetic force current to a direction of accelerating the rotor is fed to the armature coil, and the movable magnetic pole portion is displaced in a direction of increasing the opposed area between the main magnetic pole and the field magnet. In the case of decreasing the magnetic flux amount flowing in the main magnetic flux path, the electric current which is shifted at the predetermined amount from the minimum magnetic force current to a direction of decelerating the rotor is fed to the armature coil, and the movable magnetic pole portion is displaced in a direction of decreasing the opposed area between the main magnetic pole and the field magnet, thereby controlling the magnetic flux amount flowing in the main magnetic flux path. The structure is made such as to generate a magnetic force assisting the displacement of the movable magnetic pole portion on the basis of the electric current circulating to the armature coil, and the magnetic flux amount control can be easily carried out without necessity of the excessive actuator for displacing the movable magnetic pole portion.

The minimum magnetic force current is acquired from a map data in correspondence to an operating state of the rotary electric machine. A parameter fluctuating the magnetic resistances of the main magnetic flux path and the bypass magnetic flux path during the operation of the rotary electric machine is mainly constructed by a temperature, a displaced position of the movable magnetic pole portion, a rotating speed and the like. A relationship between the parameter showing the operating conditions and the fluctuating amount from the initial setting of the minimum magnetic force current can be estimated on the basis of a statistical data in the rotary electric machine having the same design. After assembling the rotary electric machine, the map data between the minimum magnetic force current and the operating condition is prepared and set.

The description is given above of the matter that the magnetic flux amount flowing in the armature can be controlled by relatively displacing the field magnet 7a with respect to the main magnetic pole 7b and the bypass magnetic pole 7c, in the rotary electric machine shown in Figs. 7 to 10, and the description is given further of the means and the method for displacing the field magnet 7a with respect to the main magnetic pole 7b and the bypass magnetic pole 7c. The present embodiment is a system for optimizing the output by controlling the magnetic flux amount, and a description will be given of a control serving as the rotary electric machine system with reference to Fig. 6.

A description will be given of an electric motor system appropriately controlling a rotating force by carrying out field weakening control, in the case that the rotary electric machine is used as an electric motor. A control device 65 feeds, to the armature coil 76, an electric current which is shifted at a predetermined amount from the minimum magnetic force current in a direction of decelerating the rotor at a time when a rotating speed corresponding to an output 63 becomes larger than a predetermined value so as to make the magnetic flux flowing in the armature small, and simultaneously displaces the control rod 7k in a clockwise direction in Fig. 10 by the actuator 7m via the control signal 66 so as to make an opposed area between the main magnetic pole 7b and the field magnet 7a small. When the rotating speed becomes smaller than the predetermined value so as to make the magnetic flux flowing in the armature large, the electric current which is shifted at the predetermined amount from the minimum magnetic force current in the direction of accelerating the rotor is simultaneously fed to the armature coil 76, and the control rod 7k is displaced in a counterclockwise direction in Fig. 10 by the actuator 7m via the control signal 66 so as to make the opposed area between the main magnetic pole 7b and the field magnet 7a large.

A description will be given of a constant voltage power generating system controlling a generated voltage to a predetermined voltage by carrying out field weakening control, in the case that the rotary electric machine is used as a generator. The control device 65 feeds, to the armature coil 76, an electric current which is shifted at a predetermined amount from the minimum magnetic force current in a direction of decelerating the rotor at a time when a generated voltage corresponding to the output 63 becomes larger than a predetermined value so as to make the magnetic flux flowing in the armature small, and simultaneously displaces the control rod 7k in the clockwise direction in Fig. 10 by the actuator 7m via the control signal 66 so as to make the opposed area between the main magnetic pole 7b and the field magnet 7a small. When the generated voltage becomes smaller than the predetermined value so as to make the magnetic flux flowing in the armature large, the electric current which is shifted at the predetermined amount from the minimum magnetic force current in the direction of accelerating the rotor is simultaneously fed to the armature coil 76, and the control rod 7k is displaced in the counterclockwise direction in Fig. 10 by the actuator 7m via the control signal 66 so as to make the opposed area between the main magnetic pole 7b and the field magnet 7a large.

There is shown an example of displacement control of the movable magnetic pole portion by positively utilizing the magnetic force appearing on the basis of the fact that the magnetic resistances of the main magnetic flux path and the bypass magnetic flux path are deflected from the minimum magnetic force condition. Since the means employed in the present embodiment accompanies the accelerating and decelerating drive of the rotary electric machine, it has a chance of affecting the operation of the rotary electric machine in the case that the magnetic flux amount control is continued over a long time. However, since it is possible to keep the influence given to the operation of the rotary electric machine small by previously setting the magnetic resistances of the main magnetic flux path and the bypass magnetic flux path to the minimum magnetic force condition in a rest state, and the change of the rotating speed and the control of changing the magnetic flux amount are continuously carried out in a normal operating state, any large problem is not generated. Further, in the case of changing the magnetic flux amount to a predetermined level or more, any great trouble does not appear by intermittently executing at a plurality of times.

### Embodiment 3

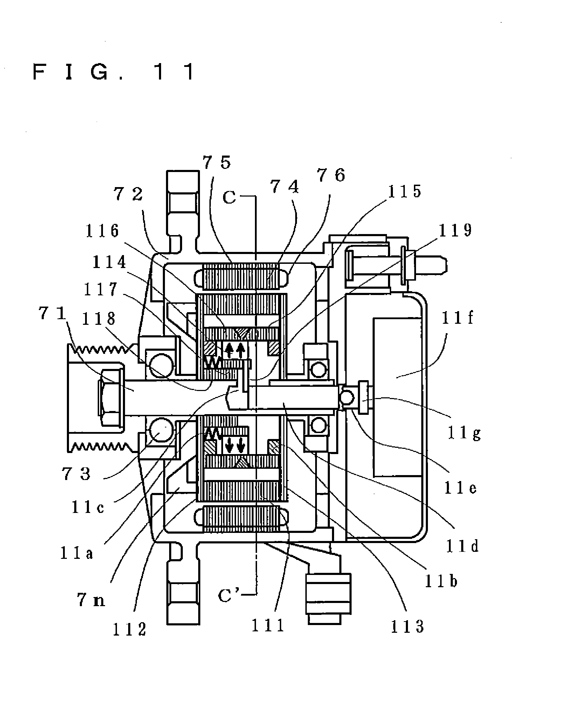

A description will be given of a rotary electric machine system in accordance with a third embodiment of the present invention with reference to Figs. 11 to 15. The third embodiment is a rotor having a magnetic material salient pole and a magnetic gap portion alternately in a circumferential direction, and is a rotary electric machine system in which an excitation portion is arranged in an inner portion of the rotor. Further, the third embodiment feeds a minimum magnetic force current to an armature coil at a time of controlling a magnetic flux amount so as to drive the rotor in an accelerating direction or a decelerating direction and effectively equalize the magnetic resistances of the main magnetic flux path and the bypass magnetic flux path to each other, and further acquires a minimum magnetic force current in a leaning manner.

Fig. 11 shows an embodiment in which the present invention is applied to the rotary electric machine of the radial gap structure, and the rotating shaft 71 is rotatably supported to the housing 72 via the bearing 73. Since the structure of the armature is the same as the second embodiment, a description thereof will be omitted. The rotor has a surface magnetic pole portion 111 in which a magnetic material salient pole and a magnetic gap portion are arranged alternately in a circumferential direction, and a first extension portion 112 and a second extension portion 113 in which the adjacent magnetic material salient poles are extended to different directions from each other in an axial direction.

An excitation portion is arranged in an inner portion of the surface magnetic pole portion 111 of the rotor so as to be connected to the first extension portion 112 and the second extension portion 113, and magnetizes the adjacent magnetic material salient poles to the different poles from each other. A major portion of the excitation portion is constructed by a field magnet 114, a main magnetic pole 115, a bypass magnetic pole 116 and a base magnetic pole 118, the field magnet 114 is fixed to an excitation portion support 117, and the field magnet 114 and the excitation portion support 117 are arranged between the main magnetic pole 115 and the bypass magnetic pole 116, and the base magnetic pole 118 so as to be structured as a movable magnetic pole portion such as to be slidable in the axial direction. The main magnetic pole 115, the bypass magnetic pole 116, the base magnetic pole 118 and the excitation portion support 117 are constructed by a cylindrical soft iron in such a manner as to make the alternating current magnetic flux hard to flow.

A displacement control means displacing the field magnet 114 and the excitation portion support 117 in the axial direction is constructed in its major portion by a spring 11a, a control rod 11d stored in a hollow portion of the rotating shaft 71, a push rod 11e, and an actuator 11f, and is structured such that a pin 119 fixed to the excitation portion support 117 comes into contact with the control rod 11d via the slit 11c of the rotating shaft 71. The cylindrical non-magnetic material 11b is arranged as a means for regulating a displacement range of the field magnet 114. Reference symbol 11g denotes a load cell.

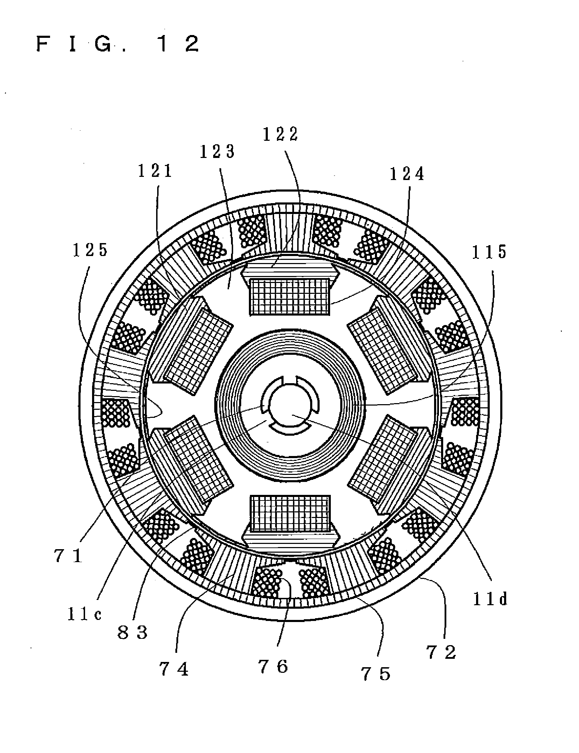

Fig. 12 shows a cross sectional view of the armature and the rotor along a line C-C' in Fig. 11, and is shown by attaching reference numerals to a part of constructing portions for explaining a mutual relationship. Since a structure of the armature is the same as the second embodiment, a description thereof will be omitted. The rotor alternately has a magnetic material salient pole and a magnetic gap portion in a circumferential direction, the adjacent magnetic material salient poles are represented by reference numerals 121 and 122, and the magnetic gap portion is represented by reference numeral 123. Reference numeral 124 denotes a magnetic flux channel portion. In the present embodiment, since cross sectional areas of the magnetic material salient poles 121 and 122 are small, the structure is made such that it is possible to transmit and feed the magnetic flux by setting a magnetic flux channel portion 124 having a cross sectional area as large as possible while utilizing a free space in an inner circumferential side. The magnetic material salient poles 121 and 122 are structured such as to be coupled by a narrow saturable magnetic material portion 125 and are constructed by punching a silicone steel plate by a predetermined mold and laminating, and a soft iron block is inserted to a slot having the cross sectional area in the magnetic flux channel portion 124. The structure is made such that a resin being non-magnetic and having a great specific resistance is filled in a portion of the non-magnetic material including the magnetic gap portion 123.

In the present embodiment, the magnetic flux channel portion 124 constructed by an iron having a great saturation magnetic flux density and having a large cross sectional area is arranged in the magnetic material salient pole which is far from the armature by utilizing a free space of the rotor. The magnetic material salient pole is constructed by laminating the silicone steel plate, and the magnetic resistance in a laminating direction of the laminated silicone steel plate is large, however, the magnetic flux channel portion 124 can transmit the magnetic flux along the rotating shaft 71.

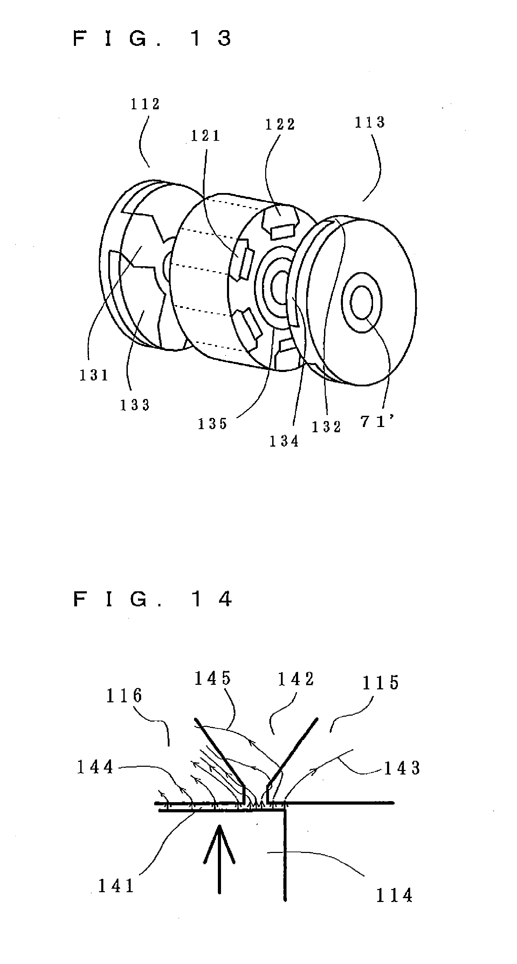

Fig. 13 is an exploded perspective view showing a structure of the rotor. In order to easily understand, a center portion having the magnetic material salient poles 121 and 122, and the first extension portion 112 and the second extension portion 113 of the magnetic material salient pole are shown separately. Reference numeral 71' denotes a hole through which the rotating shaft 71 is passed. The first extension portion 112 is structured such as to have a magnetic material salient portion 131 coming to an extension portion of the magnetic material salient pole 121 by press working the soft iron, and a non-magnetic material portion 133 is formed by a stainless steel having no magnetism. The second extension portion 113 is structured such as to have a magnetic material salient portion 132 coming to an extension portion of the magnetic material salient pole 122 by press working the soft iron, and a non-magnetic material portion 134 is formed by a stainless steel having no magnetism. Reference numeral 135 denotes a part of the excitation portion.

A structure of the excitation portion is shown as a vertical cross sectional view in Fig. 11. A major constructing member of the excitation portion is formed as a cylindrical shape, the main magnetic pole 115 and the bypass magnetic pole 116 are arranged side by side in an axial direction, the main magnetic pole 115 is connected to the second extension portion 113, and the bypass magnetic pole 116 is connected to the first extension portion 112 via a micro gap. The base magnetic pole 118 is connected to the first extension portion 112, and the field magnet 114 is fixed to the excitation portion support 117 so as to be arranged slidably between the main magnetic pole 115 and the bypass magnetic pole 116, and the base magnetic pole 118. The field magnet 114 has a magnetization in a diametrical direction, and an arrow indicates a direction of the magnetization.

The main magnetic flux path is constructed by the main magnetic pole 115, the second extension portion 113, the magnetic material salient pole 122, the magnetic material tooth 74, the magnetic material salient pole 121, the first extension portion 112, the base magnetic pole 118 and the excitation portion support 117, and the bypass magnetic flux path is constructed by the bypass magnetic pole 116, the first extension portion 112, the base magnetic pole 118 and the excitation portion support 117. The magnetic resistance of the bypass magnetic flux path is set to be approximately equal to an average value of the magnetic resistance of the main magnetic flux path to each other by using a length of a micro gap between the bypass magnetic pole 116 and the first extension portion 112 as a magnetic resistance regulating portion. In accordance with the displacement to the axial direction of the field magnet 114, the opposed area to the main magnetic pole 115 is changed while keeping a sum of the areas in which the field magnet 114 is opposed to the main magnetic pole 115 and the bypass magnetic pole 116 constant, and it is possible to change the magnetic flux amount flowing into the main magnetic flux path. Further, as described in the first and second embodiments at that time, the magnetic force against the displacement does not appear in a theoretical sense.

The lengths of the main magnetic pole 115 and the bypass magnetic pole 116 are longer than the length of the field magnet 114, however, the field magnet 114 is regulated by the cylindrical non-magnetic material 11b in such a manner as to be always opposed the main magnetic pole 115 and the bypass magnetic pole 116. A sum of the respective opposed areas between the field magnet 114, and the main magnetic pole 115 and the bypass magnetic pole 116 is constant, the areas are changed in accordance with the displacement, and the magnetic flux amount shunted into the main magnetic flux path and the amount of displacement are approximately in proportion.

The magnetic flux from the field magnet 114 flows into the main magnetic pole 115 and the bypass magnetic pole 116 like a laminar flow, and the magnetic flux amount flowing in the main magnetic pole 115 is in proportion to the area in which the field magnet 114 and the main magnetic pole 115 are opposed. Fig. 14 is an enlarged view of the portion in which the field magnet 114 shown in Fig. 11, and the main magnetic pole 115 and the bypass magnetic pole 116 are opposed, and shows in a modeling manner a magnetic flux shunt in the vicinity of the field magnet 114 in the case that the magnetic resistance of the bypass magnetic flux path is smaller than the magnetic resistance of the main magnetic flux path. In the drawing, a direction of an arrow indicates a direction in which the magnetic flux flows on the assumption that the magnetic flux flows out of an N pole of the field magnet 114. In a micro gap 141 between the field magnet 114, and the main magnetic pole 115 and the bypass magnetic pole 116, the magnetic flux flows like a laminar flow approximately orthogonally to a boundary surface between the field magnet 114 and each of the main magnetic pole 115 and the bypass magnetic pole 116, reference numeral 143 denotes a magnetic flux which flows into the main magnetic pole 115 so as to flow into the main magnetic flux path, and reference numeral 144 denotes a magnetic flux which flows into the bypass magnetic pole 116 so as to flow in the bypass magnetic flux path, respectively in a representative manner. Reference numeral 145 denotes a magnetic flux in which the magnetic flux flowing into the main magnetic pole 115 from the field magnet 114 flows into the bypass magnetic pole 116 while passing through the gap portion 142 between the main magnetic pole 115 and the bypass magnetic pole 116, representatively. If the difference between the respective magnetic resistances of the main magnetic flux path and the bypass magnetic flux path is large as mentioned above, the magnetic flux leaking to the bypass magnetic flux path from the main magnetic flux path exists and the magnetic flux amount flowing in the main magnetic flux path is not necessarily in proportion to the area in which the field magnet 114 and the main magnetic pole 115 are opposed.

In the present embodiment, the main magnetic flux path and the bypass magnetic flux path are structured such that the magnetic resistance between the main magnetic flux path and the bypass magnetic flux path becomes larger than the difference between the magnetic resistance of the main magnetic flux path and the magnetic resistance of the bypass magnetic flux path in an average operating condition. Since the smallest distance between the main magnetic flux path and the bypass magnetic flux path exists between the main magnetic pole 115 and the bypass magnetic pole 116, the magnetic resistance between the main magnetic flux path and the bypass magnetic flux path is set by setting a shape and a dimension between the main magnetic pole 115 and the bypass magnetic pole 116. As shown in Figs. 11 and 14, the shape of the gap portion 142 is set in such a manner that a gap length becomes larger at a position which is away from the field magnet 114, and the dimension is set such that the magnetic resistance between the main magnetic pole 115 and the bypass magnetic pole 116 becomes larger than the difference between the magnetic resistances of the main magnetic flux path and the bypass magnetic flux path in the average operating condition. Accordingly, the magnetic flux leaking automatically between the main magnetic pole 115 and the bypass magnetic pole 116, which is denoted by reference numeral 145 is reduced, and the magnetic flux amount flowing in the main magnetic flux path is in proportion to the area in which the field magnet 114 and the main magnetic pole 115 are opposed.

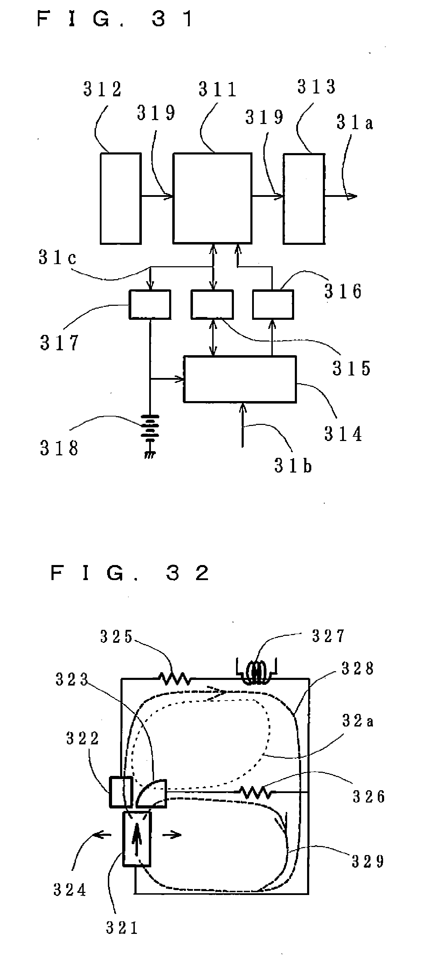

The present embodiment is structured such as to connect in parallel the main magnetic flux path which passes through the armature side and the bypass magnetic flux path which does not pass through the armature side to the field magnet, and shunt and control the magnetic flux from the field magnet on the basis of a mechanical displacement. However, the armature coil is wound around the main magnetic flux path, and the magnetic flux excited by the armature coil is of course fed to the magnetic circuit constructed by the main magnetic flux path and the bypass magnetic flux path. Fig. 32 is a circuit diagram showing the magnetic circuit mentioned above by modeling, and a description will be given of the structure of the rotary electric machine system in accordance with the present embodiment by using the drawing.

In Fig. 32, there is shown a state in which a main magnetic pole 322 and a bypass magnetic pole 323 are opposed to a field magnet 321, and a main magnetic flux path 328 and a bypass magnetic flux path 329 are connected in parallel to the field magnet 321. Reference numeral 325 denotes a magnetic resistance of the main magnetic flux path 328, reference numeral 326 denotes a magnetic resistance of the bypass magnetic flux path 329, and reference numeral 327 denotes an armature coil interposed in the main magnetic flux path 328, respectively. Reference numeral 324 denotes a direction in which the field magnet 321 is displaced relatively with respect to a unit of the main magnetic pole 322 and the bypass magnetic pole 323.

In the case of using the rotary electric machine as a motor, a drive current is fed to the armature coil 327 in correspondence to positions of the magnetic material salient pole and the magnetic material tooth, and the armature coil 327 generates a magnetic flux in the main magnetic flux path 328. Alternatively, in the case of using as a generator, an electric current is induced in the armature coil 327 in correspondence to the positions of the magnetic material salient pole and the magnetic material tooth, and a magnetic flux is going to flow in the main magnetic flux path 328 in correspondence to the current. In any case, an alternating current magnetic flux having a high frequency band and switched in correspondence to the positions of the magnetic material salient pole and the magnetic material tooth is induced in the main magnetic flux path 328. The present invention is **characterized in that** the bypass magnetic flux path 329 is connected to the field magnet in parallel for controlling the magnetic flux amount, however, there is a possibility that the alternating current magnetic flux induced by the armature coil 327 flows in the bypass magnetic flux path 329 as shown by reference symbol 32a so as to be an obstacle in a motion of the rotary electric machine system.

The present embodiment is structured such that the bypass magnetic pole 116 coming to a major portion of the bypass magnetic flux path 329 is constructed by a soft iron having an isotropy and generates an eddy current loss more easily than the magnetic material salient poles 121 and 122 constructed by the laminated material of the silicone steel plate, thereby making the alternating current magnetic flux hard to pass. The first extension portion 112 and the second extension portion 113 are constructed by the isotropic soft iron in the same manner so as to make the alternating current magnetic flux hard to pass.

A description will be given of a structure of a displacement control means for displacing the field magnet 114. Three pins 119 fixed to the excitation portion support 117 come into contact with the control rod 11d via three slits 11c provided in the rotating shaft 71, and the control rod 11d is structured such as to be slidable in an axial direction within a hollow portion of the rotating shaft 71 and comes into contact with the push rod 11e of the actuator 11f. Since the spring 11a energizes the excitation portion support 117 in a rightward direction, and the actuator 11f is structured such as to displace the push rod 11e in the axial direction, the excitation portion support 117 and the field magnet 114 are displaced in the axial direction by the actuator 11f. In the present embodiment, a step motor and a screw mechanism are used for the actuator 11f, the push rod 11e is displaced right and left in Fig. 11 on the basis of the rotation of the step motor, and the position in the axial direction of the push rod 11e is kept in the case that the step motor is not driven.

The magnetic resistance of each of the magnetic flux paths fluctuates due to various factors, however, in the present embodiment, the magnetic flux amount control is intermittently carried out during the operation of the rotary electric machine. The minimum magnetic force current is fed to the armature coil 76 at a time of the displacement control of the field magnet 114 so as to drive the rotor in the accelerating direction or the decelerating direction and effectively equalize the magnetic resistances of the main magnetic flux path and the bypass magnetic flux path, and the actuator 11f is simultaneously driven. Further, the minimum magnetic force current circulating in the armature coil is acquired in a learning manner during the operation of the rotary electric machine so as to be adapted to the magnetic resistance change of the main magnetic flux path due to various causes.

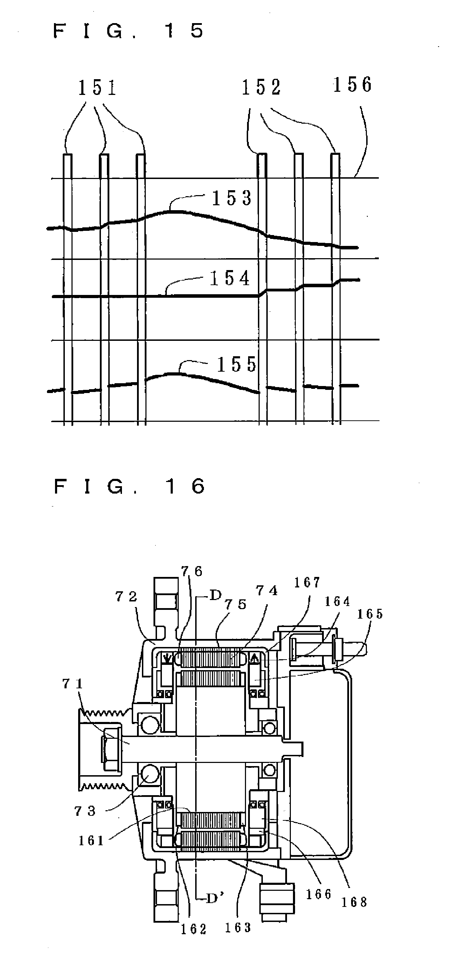

A description will be given of a structure and a method for acquiring the minimum magnetic force current in the learning manner with reference to Figs. 11 and 15. In Fig. 11, reference symbol 11g denotes a load cell, which detects a force applied to the push rod 11e. If the electric current is fed to the armature coil 76 in the direction of accelerating or decelerating the rotor, the magnetic resistance of the main magnetic flux path becomes effectively small and large, respectively. If the magnetic resistances of the main magnetic flux path and the bypass magnetic flux path has a difference, the field magnet 114 is exposed to a magnetic force displacing to a direction of increasing an opposed area to the main magnetic pole 115 or the bypass magnetic pole 116 coming to the magnetic pole having the smaller magnetic resistance. Since the actuator 11f intends to keep the position in the axial direction, the pressures within the sliding rod 11d and the push rod 11e are changed, and it is possible to detect the magnetic force by the load cell 11g.

Fig. 15 is a time chart intermittently controlling the magnetic flux amount, and a horizontal axis 156 denotes a time. Reference numeral 151 denotes a learning section, and reference numeral 152 denotes a magnetic flux amount control section. In the other time zones, driving a rotor is carried out if the rotary electric machine is the electric motor, and the generated power is picked up if it is the generator. In the learning section 151, the rotor is driven by changing a condition of the electric current fed to the armature coil 76, and an output of the load cell 11g in the period is monitored. An electric current in which the output of the load cell 11g becomes small is the minimum magnetic force current, and the minimum magnetic force current is stored in the control device or reset.

Reference numeral 152 denotes a section controlling the magnetic flux amount, which feeds the minimum magnetic force current obtained in the learning process mentioned above to the armature coil 76, and simultaneously controls the actuator 11f so as to displace the field magnet 114 in the axial direction. Since the magnetic resistances of the main magnetic flux path and the bypass magnetic flux path are approximately equalized effectively, the control mentioned above by the actuator 11f is smoothly carried out. In this case, since the rotor is driven only for a short time, the rotating speed 153 is changed. In the control section 152 of the magnetic flux amount, the rotor is decelerated, and an only slightly decelerated state is shown in the rotating speed 153. Reference numeral 154 denotes a magnetic flux amount, there is shown a state in which since the actuator 11f keeps the position in the axial direction in the learning section 151, the magnetic flux amount 154 is not changed, however, the magnetic flux amount 154 is changed in the magnetic flux amount control section 152. Reference numeral 155 denotes a generated voltage in the case that the rotary electric machine is the generator. There is shown a state in which since the generated power can not be picked up in the learning section 151 and the magnetic flux amount control section 152, the generated voltage 155 is disconnected, and there is shown a state in which the generated voltage 155 is changed in the vicinity of the magnetic flux amount control section 152. In the present embodiment, since the magnetic resistance of the bypass magnetic flux path is set to be equal to the magnetic resistance of the main magnetic flux path in a rest state, a degree in which the minimum magnetic force current fed to the armature coil 76 accelerates or decelerates the rotor at a time of controlling the magnetic flux amount is held down.

In the present embodiment, the minimum magnetic force current is acquired by setting the learning section 151, however, it is possible to employ a method in which the learning section 151 is not particularly set. For example, in the case that the rotary electric machine is the electric motor, a relationship between the electric current fed to the armature for driving the rotor and the output of the load cell 11g is always monitored, and the electric current in which the output of the load cell 11g becomes smallest is set to the minimum magnetic force current.

The magnetic resistance of the main magnetic flux path can be effectively changed by the electric current flowing in the armature coil 76, and the force necessary for displacing the movable magnetic pole portion can be made small, however, a magnetic resistance fluctuation in a high frequency band responding to the electric current which is switched in correspondence to the positions of the magnetic material salient poles 121 and 122 and the magnetic material tooth 74 induces a vibration in the movable magnetic pole portion or a pulsating magnetic flux leakage between the main magnetic flux path and the bypass magnetic flux path, and is not desirable. Accordingly, it is desirable to smoothen as a structure in which the alternating current magnetic flux in the latter high frequency band is hard to pass. In the present embodiment, the first and second extension portions 112 and 113 of the magnetic material salient pole are constructed by the soft iron block so as to be structured such as to be hard to pass the alternating current magnetic flux as shown in Fig. 13. A frequency characteristic is applied to a magnetic resistance of the magnetic flux path from the field magnet 114 to the magnetic material salient poles 121 and 122, and a magnetic permeability, an electric conductivity and dimensional data of the first and second extension portions 112 and 113 are set in such a manner as to allow a magnetic resistance change of a low frequency band which is necessary at a time of displacing the movable magnetic pole portion.

The description is given above of the matter that it is possible to control the magnetic flux amount flowing in the armature by relatively displacing the field magnet 114 with respect to the main magnetic pole 115 and the bypass magnetic pole 116 in the rotary electric machine shown in Figs. 11 to 15. The present embodiment is a system for optimizing the output by controlling the magnetic flux amount, and a description will be given of a control serving as the rotary electric machine system with reference to Fig. 6.

A description will be given of an electric motor system appropriately controlling the rotating force by carrying out the field weakening control, in the case that the rotary electric machine is used as the electric motor. The control device 65 feeds the minimum magnetic force current to the armature coil 76 via the drive circuit 67 in the time zone of the magnetic flux amount control section 152 at a time when the rotating speed corresponding to the output 63 becomes larger than a predetermined value so as to make the magnetic flux amount flowing in the armature small, thereby effectively equalizing the magnetic resistances of the main magnetic flux path and the bypass magnetic flux path and displacing the push rod 11e in a leftward direction by the actuator 11f via the control signal 66 so as to make the opposed area between the main magnetic pole 115 and the field magnet 114 small. When the rotating speed becomes smaller than a predetermined value so as to enlarge the magnetic flux amount flowing in the armature, the magnetic resistances of the main magnetic flux path and the bypass magnetic flux path are effectively equalized by feeding the minimum magnetic force current to the armature coil 76 via the drive circuit 67 in the time zone of the magnetic flux control section 152, and the opposed area between the main magnetic pole 115 and the field magnet 114 is enlarged by displacing the push rod 11e in a rightward direction via the control signal 66 by the actuator 11f.

A description will be given of a constant voltage power generating system controlling the generated power to a predetermined voltage by carrying out the field weakening control, in the case that the rotary electric machine is used as the generator. The control device 65 feeds the minimum magnetic force current to the armature coil 76 via the drive circuit 67 in the time zone of the magnetic flux amount control section 152 at a time when the generated voltage corresponding to the output 63 becomes larger than a predetermined value so as to make the magnetic flux amount flowing in the armature small, thereby effectively equalizing the magnetic resistances of the main magnetic flux path and the bypass magnetic flux path and displacing the push rod 11e in a leftward direction by the actuator 11f via the control signal 66 so as to make the opposed area between the main magnetic pole 115 and the field magnet 114 small. When the generated voltage becomes smaller than a predetermined value so as to enlarge the magnetic flux amount flowing in the armature, the magnetic resistances of the main magnetic flux path and the bypass magnetic flux path are effectively equalized by feeding the minimum magnetic force current to the armature coil 76 via the drive circuit 67 in the time zone of the magnetic flux control section 152, and the opposed area between the main magnetic pole 115 and the field magnet 114 is enlarged by displacing the push rod 11e in the rightward direction via the control signal 66 by the actuator 11f.

### Embodiment 4

A description will be given of a rotary electric machine system in accordance with a fourth embodiment of the present invention with reference to Figs. 16 to 21. It is the rotary electric machine system in which a magnetic material salient pole and an assembled magnet are arranged in a surface magnetic pole portion alternately in a circumferential direction, and an excitation portion is arranged in a housing side. Further, a magnetic resistance of a main magnetic flux path is effectively regulated by connecting a constant current load to an armature coil at a time of controlling a magnetic flux amount and circulating a predetermined electric current on the basis of an induced voltage.

Fig. 16 shows an embodiment in which the present invention is applied to a rotary electric machine of a radial gap structure, and the rotating shaft 71 is rotatably supported to the housing 72 via the bearing 73. Since a structure of an armature is the same as the second embodiment, a description thereof will be omitted. A rotor is constructed by a surface magnetic pole portion 161 in which the magnetic material salient pole and the assembled magnet are arranged alternately in a circumferential direction, a first extension portion 162 and a second extension portion 163 in which the adjacent magnetic material salient poles are extended in different directions from each other in an axial direction. Two excitation portions are arranged in a rest side via an air gap opposing with the first extension portion 162 and the second extension portion 163 of the rotor, and a magnetic flux is fed in a lump between the first extension portion 162 and the second extension portion 163, and the cylindrical magnetic yoke 75, and the adjacent magnetic material salient poles are magnetized to different poles from each other.

In the drawing, there is shown the matter that the excitation portion opposed to the second extension portion 163 includes a field magnet 164, a main magnetic pole 165, a bypass magnetic pole 166, and a base magnetic pole 167, and is constructed further by an excitation portion support 168 rotatably supporting the main magnetic pole 165 and the bypass magnetic pole 166 to the housing 72. Reference numeral is not attached to a constructing member of the excitation portion close to the first extension portion 162, however, it has the same structure, and the same reference numeral is used for the same kind of member. In this case, a magnetization direction of the field magnet 164 is arranged in such a manner as to be inverted to each other in the excitation portions close to the first extension portion 162 and the second extension portion 163 as shown by an arrow.

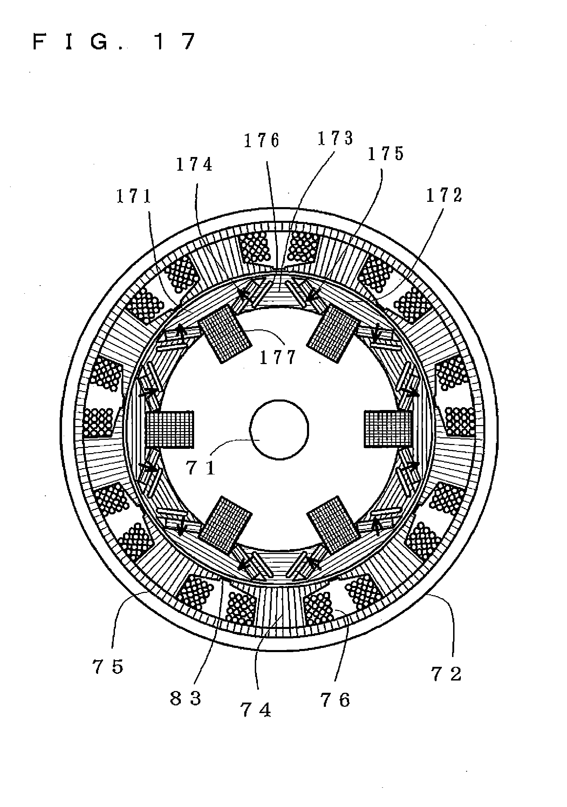

Fig. 17 shows a cross sectional view of the armature and the rotor along a line D-D' in Fig. 16, and reference numerals are attached to a part of the constructing portions for explaining a mutual relationship. Since the structure of the armature is the same as the second embodiment, a description thereof will be omitted.

In Fig. 17, the magnetic material salient pole and the assembled magnet are arranged alternately in a circumferential direction. A combination in which magnet plates 174 and 175 having approximately the same magnetization direction are arranged in both side surfaces of an intermediate magnetic material salient pole 173 is constructed as an assembled magnet which is magnetically equivalent to a magnet, and the surface magnetic pole portion 161 of the rotor is constructed by magnetic material salient poles 171 and 172 which is comparted by an assembled magnet in which uniform magnetic materials are arranged at an equal interval in a circumferential direction, and the assembled magnet. Further, the adjacent magnetic material salient poles 171 and 172 are structured such that magnetization directions in the circumferential direction of the adjacent assembled magnets are inverted to each other so as to be magnetized to different directions from each other. The magnet plates arranged in both side surfaces in the circumferential direction of each of the magnetic material salient poles 171 and 172 are formed as a V-shaped form, an angle of intersection of the V-shaped form is set to an angle which is preferable for a magnetic flux barrier. Arrows attached to the magnet plates 174 and 175 indicate a magnetization direction which is approximately orthogonal to plate surfaces of the magnet plates 174 and 175.

Reference numeral 177 denotes a magnetic flux channel portion corresponding to the magnetic flux channel portion 124 in the third embodiment. In the present embodiment, since cross sectional areas of the magnetic material salient poles 171 and 172 are small, the structure is made such that a magnetic flux can be transferred and fed as the magnetic flux channel portion 177 having a cross sectional area as large as possible by utilizing an inside free space. Reference numeral 176 denotes a magnetic gap portion provided for enlarging magnetic resistances of magnetic flux paths of the magnetic plates 174 and 175. A magnetic pole portion of the rotor is constructed by punching out a portion corresponding to the magnet plates 174 and 175 or the magnetic flux channel portion 177 and the magnetic gap portion 176 from a silicone steel plate so as to laminate, thereafter inserting the magnet plates 174 and 175, and inserting a soft iron block to the magnetic flux channel portion 177.

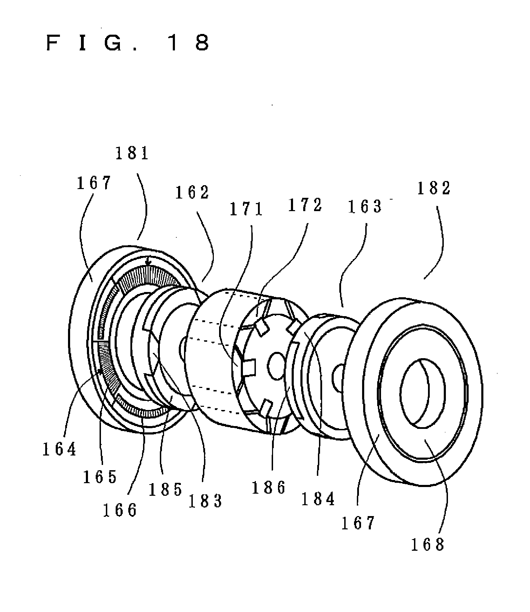

Fig. 18 is an exploded perspective view showing a structure of the rotor and an arrangement of the excitation portion. For easily understanding, a center portion having the magnetic material salient poles 171 and 172, and the like, and the first and second extension portions 162 and 163 of the magnetic material salient pole are shown separately. The first extension portion 162 is constructed by press working the soft iron and having a magnetic material salient portion 183 coming to an extension portion of the magnetic material salient pole 171, and a non-magnetic material portion 185 is formed by a stainless steel having no magnetism. The second extension portion 163 is constructed by press working the soft iron and having a magnetic material salient portion 184 coming to an extension portion of the magnetic material salient pole 172, and a non-magnetic material portion 186 is formed by a stainless steel having no magnetism.

The excitation portions 181 and 182 are opposed respectively to the first extension portion 162 and the second extension portion 163 via gaps, the main magnetic pole 165 of the excitation portions 181 and 182 and the magnetic material connected thereto are magnetically connected to the respective magnetic material salient poles 183 and 184 of the first extension portion 162 and the second extension portion 163, and the base magnetic pole 167 of the excitation portions 181 and 182 is connected to both ends of the cylindrical magnetic yoke 75 shown in Fig. 16. The main magnetic pole 165 and the bypass magnetic pole 166 are fixed to the excitation portion support 168 of the excitation portions 181 and 182, and are rotationally displaced in the circumferential direction as described below so as to be structured such as to change a relative position between the main magnetic pole 165 and the bypass magnetic pole 166, and the field magnet 164.

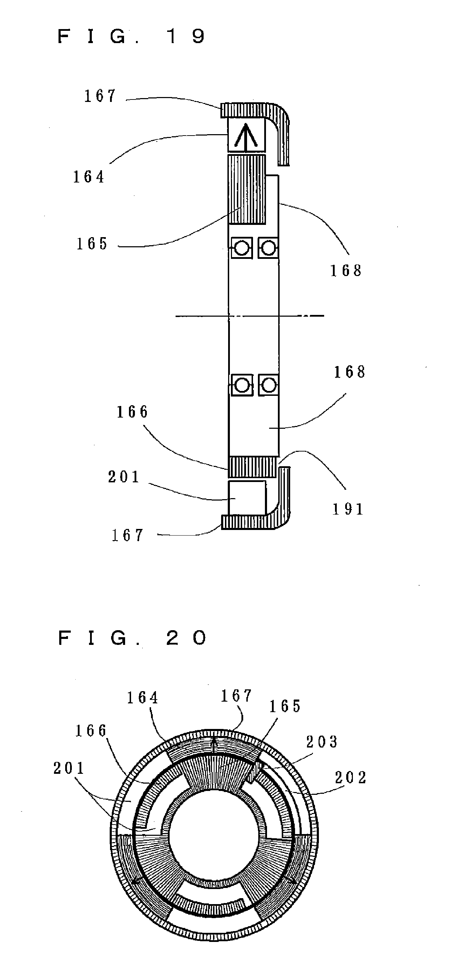

A description will be given of a structure of the excitation portion with reference to Figs. 19 and 20. Fig. 19 shows a vertical cross sectional view of the excitation portion 182, and Fig. 20 shows a plan view as seen from the rotor side, respectively in an enlarged manner. In Figs. 19 and 20, three field magnets 164 are fixed to an inner side of the base magnetic pole 167 at an equal interval in the circumferential direction, and the main magnetic pole 165 and the bypass magnetic pole 166 are arranged side by side in the circumferential direction so as to be opposed in a diametrical direction to each of the field magnets 164. The field magnet 164 is always opposed to the main magnetic pole 165 and the bypass magnetic pole 166, a sum of the areas in which the field magnet 164 is opposed to the main magnetic pole 165 and the bypass magnetic pole 166 is constant, and the structure is made such that each of the areas is changed on the basis of a relative displacement between the main magnetic pole 165 and the bypass magnetic pole 166 constructing a magnetic pole unit together with the field magnet 164. Reference numeral 201 denotes a magnetic gap portion.

The main magnetic pole 165 is magnetically connected to the magnetic material salient portion 184 of the second extension portion 163 which is opposed via the gap, and the bypass magnetic pole 166 is magnetically connected to the base magnetic pole 167 via a micro gap 191. In the excitation portion 182 in accordance with the present embodiment, the main magnetic flux path is a magnetic flux path from the main magnetic pole 165, the magnetic material salient portion 184, the magnetic material salient pole 172, magnetic material tooth 74 and the cylindrical magnetic yoke 75 to the base magnetic pole 167, and the bypass magnetic flux path is a magnetic flux path from the bypass magnetic pole 166 to the base magnetic pole 167 via the gap 191. In the present embodiment, a magnetic resistance of the bypass magnetic flux path is set to be larger than a magnetic resistance of the main magnetic flux path by using an opposed area and a gap length in the gap 191 as a magnetic resistance regulating portion.

The magnetic material salient poles 171 and 172 are magnetized by the magnetic plates arranged in side surfaces, the magnetic material salient pole 171 is magnetized to an N pole and the magnetic material salient pole 172 is magnetized to an S pole. In the present embodiment, the excitation portion is arranged in such a manner that the excitation portion and the magnet plate magnetize the magnetic material salient poles to the same polarity. In other words, in the excitation portion 181, the field magnet 164 magnetizes the main magnetic pole 165 to the N pole, and excites the magnetic material salient portion 183 and the magnetic material salient pole 171 to the N pole. Further, in the excitation portion 182, the field magnet 164 magnetizes the main magnetic pole 165 to the S pole, and excites the magnetic material salient portion 184 and the magnetic material salient pole 172 to the S pole.

As mentioned above, the magnet plates 174 and 175 and the excitation portions 181 and 182 both excite the magnetic material salient poles 171 and 172 to the same polarity respectively. A role of the magnet plates 174 and 175 constructing the assembled magnet is a magnetic flux barrier for generating a magnetic flux and forming a region having a great magnetic resistance in the circumferential direction. In the present embodiment, since a sufficient magnetic flux can be fed from the excitation portions 181 and 182, and it is an object to control the magnetic flux to the armature side by shunting and controlling the magnetic fluxes from the excitation portions 181 and 182, the magnetic fluxes from the magnet plates 174 and 175 are an obstacle in the light of the magnetic flux amount control. The magnetic gap portion 176 constructed by a slit provided in the intermediate magnetic material salient pole 173 is provided for making the magnetic resistance of the magnetic flux path in which the magnetic fluxes of the magnet plates 174 and 175 pass large so as to make the contribution of the magnet plates 174 and 175 to the magnetic flux flowing to the armature side small.

In Fig. 20, a gap portion 202 provided in a part of a magnetic gap portion 201 and a protrusion portion 203 construct a displacement regulating means for regulating the magnetic pole unit (the main magnetic pole 165 and the bypass magnetic pole 166) within a predetermined range. In other words, the protrusion portion 203 is fixed to the main magnetic pole 165 and the bypass magnetic pole 166 side, and the displacement of the protrusion portion 203 is limited between the adjacent field magnets 164. A state shown in Fig.20 is a reference position, and the protrusion portion 203 comes into contact with the field magnet 164. An angle length in a circumferential direction of the protrusion portion 203 is set in such a manner that a rotational displacement amount of the magnetic pole unit is approximately regulated to an angle length in the circumferential direction of the main magnetic pole 165 in a clockwise direction from the reference position.

In the present embodiment, in addition to the main magnetic flux path and the bypass, a third magnetic flux path passing through the assembled magnet is connected to the field magnet 164 in parallel. A magnetic resistance of the third magnetic flux path which is calculated by using the magnetic plates 174 and 175 portions as a gap is set to be larger than the magnetic resistance of the main magnetic flux path. The present embodiment is structured such that a magnetic flux amount flowing into the main magnetic flux path is not affected by making the magnetic resistance of the third magnetic flux path larger than the magnetic resistance of the main magnetic flux path by the magnetic gap portion 176 provided in the intermediate magnetic material salient pole 173.

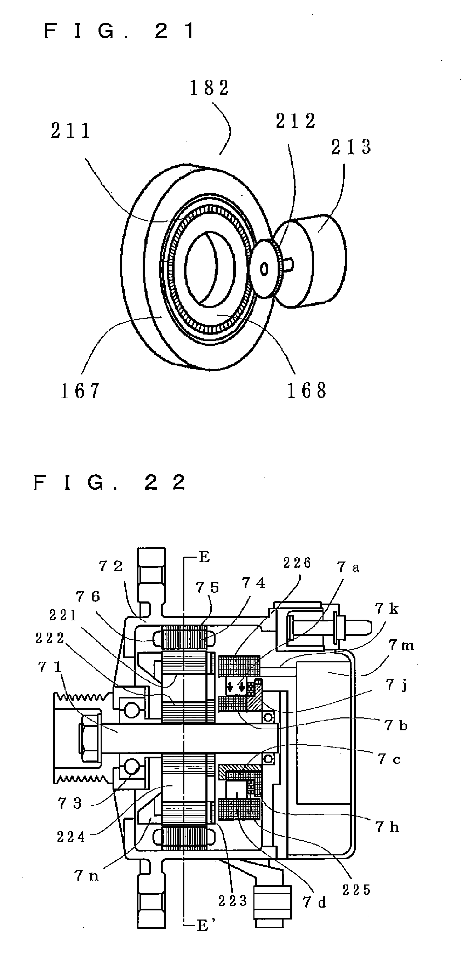

Fig. 21 is a perspective view showing a displacement control means for rotationally displacing the magnetic pole unit with respect to the field magnet 164 in the excitation portion 182. In the drawing, a gear 211 is provided in an end surface of the excitation portion support 168, and a gear 212 and a step motor 213 are arranged in such a manner as to be engaged with the gear 211. A magnetic flux amount between the magnetic material salient poles 171 and 172 and the magnetic material tooth 74 is changed by rotationally driving the step motor 213 so as to displace the magnetic pole unit with respect to the field magnet 164 as well as keeping the position of the magnetic pole unit by the step motor 213 and the gears 211 and 212. A displacement control means having the same structure is provided in the excitation portion 181 side.

In the present embodiment, as a means for effectively regulating a dispersion of the magnetic resistance of the magnetic flux path, a predetermined constant current load is connected to the armature coil 76 at a time of changing the magnetic flux amount. In the case of setting the rotary electric machine to the electric motor, if a load (not shown) is connected to the armature coil 76, an electric voltage in a direction of reducing the magnetic flux change is induced by a magnetic flux interlinking to the armature coil 76, and an electric current flows in correspondence to an impedance of the load. Accordingly, the magnetic resistance of the main magnetic flux path becomes effectively large. The magnetic resistance of the main magnetic flux path is designed to be slightly smaller than the magnetic resistance of the bypass magnetic flux path, and a constant current load effectively equalizing the magnetic resistances of the main magnetic flux path and the bypass magnetic flux path after assembling the rotary electric machine is detected and is stored in the control device. At a time of changing the magnetic flux amount, the constant current load stored in the armature coil 76 is connected, and a magnetic force preventing the displacement is made small in the process of relatively displacing the magnetic pole unit with respect to the field magnet 164.

Various methods exist as a means for achieving a predetermined constant current load, and include a constant current circuit controlling such that a predetermined electric current flows in the armature coil on the basis of an induced voltage to the armature coil, a load having a predetermined impedance which is defined per rotating speed and the like. In the present embodiment, the constant current circuit is used.

In the rotary electric machines shown in Figs. 16 to 21, the description is given above of the matter that the magnetic flux amount flowing in the armature can be controlled by relatively displacing the magnetic pole unit of the excitation portions 181 and 182 with respect to the field magnet 164, and the description is further given of the means and the method for displacing. The present embodiment is a system for optimizing the output by controlling the magnetic flux amount, and a description will be given of a control serving as the rotary electric machine system with reference to Fig. 6.

A description will be given of an electric motor system appropriately controlling a rotating force by carrying out field weakening control in the case that the rotary electric machine is used as the electric motor. A constant current load accompanies a decelerating drive of the rotor, and corresponds to a regulation to a direction effectively enlarging the magnetic resistance of the main magnetic flux path, and a magnetic flux amount control is executed in accordance with the following steps. When the rotating speed corresponding to the output 63 becomes larger than a predetermined value so as to make the magnetic flux amount flowing in the armature small, the control device 65 connects a constant current circuit (not shown) circulating a predetermined electric current on the basis of an induced voltage to the armature coil 76 so as to effectively make the magnetic resistance of the main magnetic flux path equal to the magnetic resistance of the bypass magnetic flux path, and rotationally displaces the magnetic pole unit in a clockwise direction in Fig. 20 by the step motor 213 of the excitation portion 181 and 182 via the control signal 66 so as to make the opposed area between the main magnetic pole 165 and the field magnet 164 small. When the rotating speed becomes smaller than a predetermined value so as to make the magnetic flux amount flowing in the armature large, the current application to the armature coil 76 is stopped, and the magnetic pole unit is rotationally displaced in a counterclockwise direction in Fig. 20 by the step motor 213 of the excitation portions 181 and 182 via the control signal 66 so as to make the opposed area between the main magnetic pole 165 and the field magnet 164 large.

A description will be given of a constant voltage power generating system controlling a generated voltage to a predetermined electric voltage by carrying out the field weakening control in the case that the rotary electric machine is used as the generator. A constant current load accompanies a decelerating drive of the rotor, and corresponds to a regulation to a direction effectively enlarging the magnetic resistance of the main magnetic flux path, and a magnetic flux amount control is executed in accordance with the following steps. When the generated voltage corresponding to the output 63 becomes larger than a predetermined value so as to make the magnetic flux amount flowing in the armature small, the control device 65 connects a constant current circuit (not shown) circulating a predetermined electric current on the basis of an induced voltage to the armature coil 76, and rotationally displaces the magnetic pole unit in the clockwise direction in Fig. 20 by the step motor 213 of the excitation portion 181 and 182 via the control signal 66 so as to make the opposed area between the main magnetic pole 165 and the field magnet 164 small. When the generated voltage becomes smaller than a predetermined value so as to make the magnetic flux amount flowing in the armature large, a great impedance load is connected to the armature coil 76 so as to make the flowing electric current small, and the magnetic pole unit is rotationally displaced in the counterclockwise direction in Fig. 20 by the step motor 213 of the excitation portions 181 and 182 via the control signal 66 so as to make the opposed area between the main magnetic pole 165 and the field magnet 164 large.

In the control of the system mentioned above, in the case of increasing the magnetic flux amount, the constant current load is not connected to the armature, but the magnetic force appearing on the basis of the magnetic resistance of the main magnetic flux path being smaller than the magnetic resistance of the bypass magnetic flux path is utilized for displacing the movable magnetic pole portion.

Since the magnetic resistance regulating means of the main magnetic flux path employed in the present embodiment accompanies the decelerating drive of the rotary electric machine, it has a chance of affecting the operation of the rotary electric machine in the case that the magnetic flux amount control is continued over a long time. However, since both the change of the rotating speed and the magnetic flux amount changing control are continuously carried out in the normal operating state, they do not become a big problem. Further, in the case that the magnetic resistance change of the main magnetic flux path is expected to be large on the basis of a variation per hour or a temperature change, a structure which acquires a correcting condition of the magnetic resistance of the main magnetic flux path in a learning manner or a structure which acquires from a map data is employed.

The map data is prepared in the following manner. A parameter fluctuating the magnetic resistances of the main magnetic flux path and the bypass magnetic flux path during the operation of the rotary electric machine is mainly constructed by an electric current flowing in the armature, a rotating speed, a temperature, a displaced position of the movable magnetic pole portion and the like. A relationship between the parameter showing the operating condition and an amount of fluctuation from an initial set condition of an optimum constant current load condition can be estimated on the basis of a statistical data in the rotary electric machine having the same design. After assembling the rotary electric machine, the map data between the optimum constant current load condition and the parameter showing the operating condition is prepared and set.

### Embodiment 5

A description will be given of a fifth embodiment of the rotary electric machine system in accordance with the present invention with reference to Figs. 22 to 26. The fifth embodiment is a rotary electric machine system of a radial gap structure, an excitation portion is arranged in a housing side which is adjacent to one axial direction of a rotor, and a magnetic resistance regulating coil is provided in a bypass magnetic flux path.

Fig. 22 shows an embodiment in which the present invention is applied to the rotary electric machine of the radial gap structure, and the rotating shaft 71 is rotatably supported to the housing 72 via the bearing 73. Since the structure of the armature is the same as the second embodiment, a description thereof will be omitted. A magnetic pole portion of the rotor is constructed by a surface magnetic pole portion 221 in which a magnetic material salient pole and a permanent magnet are arranged alternately in a circumferential direction, and a first extension portion 222 and a second extension portion 223 in which the adjacent magnetic material salient poles are extended alternately to an inner circumferential side in a radial direction and a right side in an axial direction. The excitation portion is arranged in a housing side in a right side of the rotor so as to be opposed to the first extension portion 222 and the second extension portion 223 via a gap, feeds the magnetic flux to the first extension portion 222 and the second extension portion 223 in a lump, and magnetizes the adjacent magnetic material salient poles to different poles from each other.

In the drawing, a major portion of the excitation portion has approximately the same structure as the second embodiment, and the major portion is constructed by the field magnet 7a, the main magnetic pole 7b, and the bypass magnetic pole 7c. The main magnetic pole 7b and the bypass magnetic pole 7c are fixed to the excitation portion support 7j, and the excitation portion support 7j is fixed to the housing 72. The field magnet 7a and a base magnetic pole 226 are slidable in a circumferential direction with respect to a magnetic pole unit constructed as a movable magnetic pole portion by the main magnetic pole 7b and the bypass magnetic pole 7c so as to be connected to the actuator 7m via the control rod 7k. Reference numeral 224 denotes a hollow portion in which a cooling air flows, reference symbol 7h denotes an annular magnetic core, and reference numeral 225 denotes a magnetic resistance regulating coil arranged for regulating the magnetic resistance of the bypass magnetic flux path, respectively.

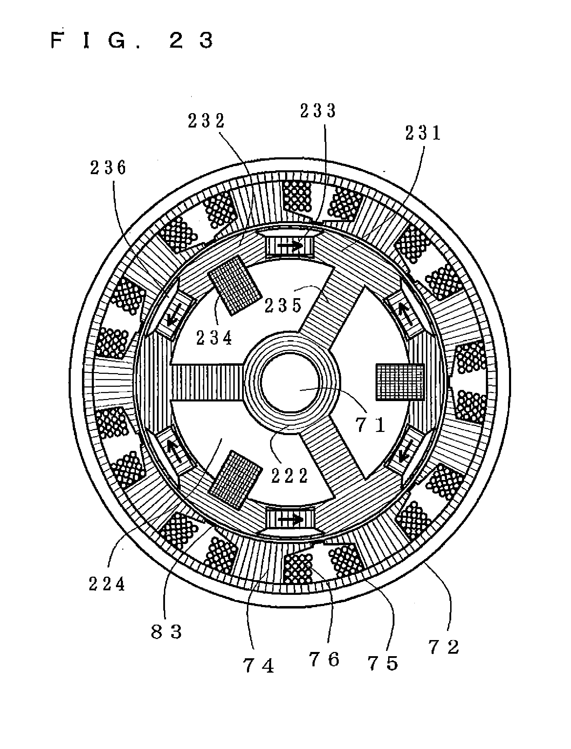

Fig. 23 shows a cross sectional view of the armature and the rotor along a line E-E' in Fig. 22, and is shown by attaching reference numerals to a part of the constructing portions for explaining a mutual relationship. Since the structure of the armature is the same as the second embodiment, a description thereof will be omitted.

In Fig. 23, a surface magnetic pole portion of the rotor is comparted by a permanent magnet 233 in which uniform magnetic materials are arranged at an equal interval in a circumferential direction, and the adjacent magnetic material salient poles are denoted as magnetic material salient poles 231 and 232 representatively. The adjacent magnetic material salient poles 231 and 232 are extended alternately to an inner diameter direction and a rightward direction which is in parallel to an axis so as to be set to a first extension portion 222 and a second extension portion 223 respectively. As shown by reference numeral 235, a portion which is extended to the inner diameter direction so as to be assembled is set to the first extension portion 222, and a portion which is extended to the right in the axial direction is set to the second extension portion 223. Reference numeral 236 denotes a non-magnetic material portion. Further, magnetization directions in the circumferential direction of the permanent magnets 233 which are adjacent such that the adjacent magnetic material salient poles 231 and 233 are magnetized to the different directions from each other are inverted to each other. An arrow attached to the permanent magnet 233 shows a magnetization direction.

The permanent magnet 233 feeds the magnetic flux to the magnetic material salient poles 231 and 232, and comes to a magnetic flux barrier forming a region having a great magnetic resistance in the circumferential direction. Reference numeral 234 denotes a magnetic flux channel portion corresponding to the magnetic flux channel portion 124 in the third embodiment. The magnetic material salient poles 231 and 232 are constructed by punching out a portion corresponding to the permanent magnet 233 or the magnetic flux channel portion 234, and the non-magnetic material portion 236 from the silicone steel plate to laminate, thereafter inserting the permanent magnet 233 and inserting the soft iron block to the magnetic flux channel portion 234. The non-magnetic material portion 236 is constructed by filling a non-magnetic material having a large specific resistance such as a resin.

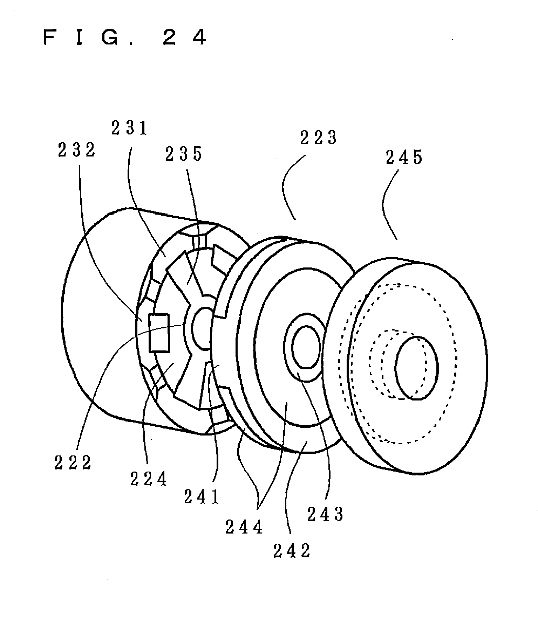

Fig. 24 is an exploded perspective view showing a structure of the rotor and an arrangement of the excitation portion. For easily understanding, a center portion having the magnetic material salient poles 231 and 232, and the like, and the second extension portion 223 of the magnetic material salient pole are shown separately, and there is shown an excitation portion 245 which is opposed to the second extension portion 223 via a gap and is arranged in the housing 72 side. The second extension portion 223 is constructed by press working the soft iron and having a magnetic material salient portion 241 coming to an extension portion of the magnetic material salient pole 232, and a non-magnetic material portion 244 is formed by a stainless steel having no magnetism. An annular magnetic core portion 242 which is integral with the magnetic material salient portion 241 is structured such as to be opposed to a base magnetic pole 226 of the excitation portion 245 via a micro gap, and a cylindrical magnetic core 243 connected to the first extension portion 222 is structured such as to be opposed to the main magnetic pole 7b via a micro gap, respectively.

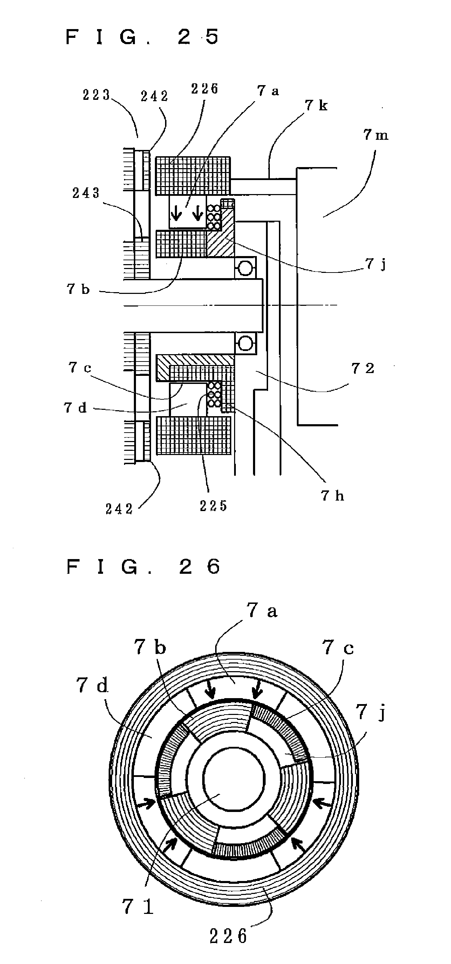

Fig. 25 shows a part of the rotor which is shown its vertical cross sectional view in Fig. 22 and the excitation portion in an enlarged manner, and Fig. 26 shows a cross sectional view of the excitation portion. A description will be given of a structure of the excitation portion and a motion principle of a magnetic flux amount control with reference to Figs. 22, 25 and 26. A major part of the excitation portion is constructed by the field magnet 7a and the magnetic pole unit (the main magnetic pole 7b and the bypass magnetic pole 7c). Three field magnets 7a each having a magnetism in a diametrical direction are provided, and are arranged alternately in the circumferential direction in the field magnet 7a and the non-magnetic material 7d so as to be fixed to an inner side of the base magnetic pole 226 constructed by a cylindrical magnetic material. A pair of the main magnetic pole 7b and the bypass magnetic pole 7c are arranged inside so as to be opposed to each of the field magnet 7a, and are fixed to the excitation portion support 7j. The bypass magnetic pole 7c is further connected to the annular magnetic core 7h, and the annular magnetic core 7h is opposed to the base magnetic pole 226 via a gap. Further, the main magnetic pole 7b is opposed to the cylindrical magnetic core 243, and the base magnetic pole 226 is opposed to the annular magnetic core portion 242. The main magnetic pole 7b, the bypass magnetic pole 7c, the base magnetic pole 226 and the annular magnetic core 7h constructing the excitation portion are constructed by an isotropic soft iron having a great saturation magnetic flux density in such a manner that an alternating current magnetic flux is hard to flow thereto and is constructed compact as a whole.

The magnetic material salient poles 231 and 232 are magnetized by the permanent magnet 233, the magnetic material salient pole 231 is magnetized to an N pole, and the magnetic material salient pole 232 is magnetized to an S pole. In the present embodiment, the excitation portion and the permanent magnet are arranged in such a manner as to magnetize the magnetic material salient pole to the same polarity. In other words, the field magnet 7a magnetizes the main magnetic pole 7b to the N pole, and excites the first extension portion 222 and the magnetic material salient pole 231 to the N pole side. Further, it excites the magnetic material salient pole 232 to the S pole side via the second extension portion 223.

In the same manner as the second embodiment, the field magnet 7a is structured such as to slide in the circumferential direction with respect to the magnetic pole unit and is displaced by the actuator 7m. The actuator 7m connects the field magnet 7a and the base magnetic pole 226 via a window provided in the housing 72 by three control rods 7k so as to rotationally displace, and changes the opposed area between the field magnet 7a and the main magnetic pole 7b.

The structure is made such that a main magnetic flux path in which the magnetic flux flowing into the main magnetic pole 7b from one magnetic pole of the field magnet 7a flows back to the other magnetic pole of the field magnet 7a via the cylindrical magnetic core 243, the first extension portion 222, the magnetic material salient pole 221, the magnetic material tooth 74, the magnetic material salient pole 222, the second extension portion 223, the magnetic material salient portion 241, the annular magnetic core portion 242 and the base magnetic pole 226, and a bypass magnetic flux path in which the magnetic flux flowing into the bypass magnetic pole 7c from one magnetic pole of the magnet 7a flows back to the other magnetic pole of the field magnet 7a via the annular magnetic core 7h and the base magnetic pole 226 are connected to the field magnet 7a in parallel, the magnetic flux is shunted into the main magnetic flux path and the bypass magnetic flux path in accordance with the displacement in the circumferential direction of the field magnet 7a, and the magnetic flux amount flowing in the main magnetic flux path is controlled. A magnetic resistance between both the magnetic flux paths is set to be approximately equal to each other by changing a gap length and an opposed area between the annular magnetic core 7h and the base magnetic pole 226, and a magnetic force against the displacement of the field magnet 7a is made small.

In the present embodiment, in addition to the main magnetic flux path and the bypass, the third magnetic flux path passing through the permanent magnet 233 is connected to the field magnet 7a in parallel. A magnetic resistance of the third magnetic flux path calculated by setting the permanent magnet 233 portion to a gap is set to be larger than the magnetic resistance of the main magnetic flux path. In the present embodiment, a length of the permanent magnet 233 is made sufficiently large, and the magnetic flux amount flowing into the main magnetic flux path is not affected.

In the present embodiment, the step motor is used as the actuator 7m, and displaces the field magnet 7a via the control rod 7k. In the case that the drive current is not circulated in the actuator 7m, the position of the field magnet 7a is stored so as to make the energy necessary for the control small.

The magnetic resistance of each of the magnetic flux paths fluctuates due to various factors, however, in the present embodiment, the magnetic force preventing the displacement is held down by feeding the predetermined electric current to the magnetic resistance regulating coil 225 arranged in such a manner as to wind the bypass magnetic flux path at a time of displacement controlling the field magnet 7a so as to effectively regulate the magnetic resistance of the bypass magnetic flux path. In order to effectively equalize the magnetic resistances of the main magnetic flux path and the bypass magnetic flux path after assembling the rotary electric machine, the electric current fed to the magnetic resistance regulating coil 225 is individually detected, the electric current minimizing the magnetic force preventing the displacement is stored as the predetermined electric current in the control device, the stored predetermined electric current is fed to the magnetic resistance regulating coil 225 at a time of changing the magnetic flux amount, and the magnetic resistance of the bypass magnetic flux path is effectively regulated so as to hold down the magnetic force preventing the displacement in the process of displacing the field magnet 7a.

The description is given above of the matter that it is possible to control the magnetic flux amount flowing in the armature by relatively displacing the field magnet 7a with respect to the magnetic pole unit in the rotary electric machine shown in Figs. 22 to 26, and the description is given of the means and the method for displacing. The present embodiment relates to a system for optimizing the output by controlling the magnetic flux amount, and a description will be given of a control serving as the rotary electric machine system with reference to Fig. 6.

A description will be given of an electric motor system appropriately controlling a rotating force by carrying out field weakening control in the case that the rotary electric machine is used as the electric motor. The control device 65 feeds a predetermined electric current to the magnetic resistance regulating coil 225 so as to regulate in such a manner that the magnetic resistance of the bypass magnetic flux path and the magnetic resistance of the main magnetic flux path become effectively equal to each other at a time when the rotating speed corresponding to the output 63 becomes larger than a predetermined value so as to make the magnetic flux amount flowing in the armature small, and simultaneously displaces the control rod 7k in a clockwise direction in Fig. 26 by the actuator 7m via the control signal 66 so as to make the opposed area between the main magnetic pole 7b and the field magnet 7a small. When the rotating speed becomes smaller than a predetermined value so as to make the magnetic flux amount flowing in the armature large, it feeds a predetermined electric current to the magnetic resistance regulating coil 225, and simultaneously displaces the control rod 7k in a counterclockwise direction in Fig. 26 by the actuator 7m via the control signal 66 so as to make the opposed area between the main magnetic pole 7b and the field magnet 7a large.

A description will be given of a constant voltage power generating system controlling a generated voltage to a predetermined voltage by carrying out field weakening control in the case that the rotary electric machine is used as the generator. The control device 65 feeds a predetermined electric current to the magnetic resistance regulating coil 225 so as to regulate in such a manner that the magnetic resistance of the bypass magnetic flux path and the magnetic resistance of the main magnetic flux path become effectively equal to each other at a time when the generated voltage corresponding to the output 63 becomes larger than a predetermined value so as to make the magnetic flux amount flowing in the armature small, and simultaneously displaces the control rod 7k in the clockwise direction in Fig. 26 by the actuator 7m via the control signal 66 so as to make the opposed area between the main magnetic pole 7b and the field magnet 7a small. When the generated voltage becomes smaller than a predetermined value so as to make the magnetic flux amount flowing in the armature large, it feeds a predetermined electric current to the magnetic resistance regulating coil 225, and simultaneously displaces the control rod 7k in the counterclockwise direction in Fig. 26 by the actuator 7m via the control signal 66 so as to make the opposed area between the main magnetic pole 7b and the field magnet 7a large.

In the present embodiment, it is necessary to feed the electric current to the magnetic resistance regulating coil, however, since it is limited to the magnetic flux amount control time, an energy loss can be held down. The means for feeding the electric current to the armature coil so as to regulate the magnetic resistance of the main magnetic flux path affects the rotation of the rotor, however, the magnetic resistance regulating means on the basis of the magnetic resistance regulating coil has an advantage that it does affect the rotation of the rotor. In the present embodiment, the electric current feeding to the magnetic resistance regulating coil is previously set by the test after manufacturing, however, may be structured such as to be acquired in a learning manner or on the basis of a map data so as to cope with the various fluctuation factors.

In the present embodiment, the force necessary for the displacement is reduced by setting the magnetic resistances of the main magnetic flux path and the bypass magnetic flux path to the minimum magnetic force condition, however, it is possible to further make the force necessary for the displacement small. In other words, the magnetic resistances of the main magnetic flux path and the bypass magnetic flux path are regulated to be shifted from the minimum magnetic force condition in such a manner that the magnetic force appears in the direction displacing the movable magnetic pole portion at a time of the displacement control, thereby assisting the output of the actuator of the displacement control means. Since the magnetic resistance regulation by the magnetic resistance regulating coil has a quick response, it is possible to easily switch the direction of the magnetic force in conformity to the displacement controlling direction of the movable magnetic pole portion.

### Embodiment 6

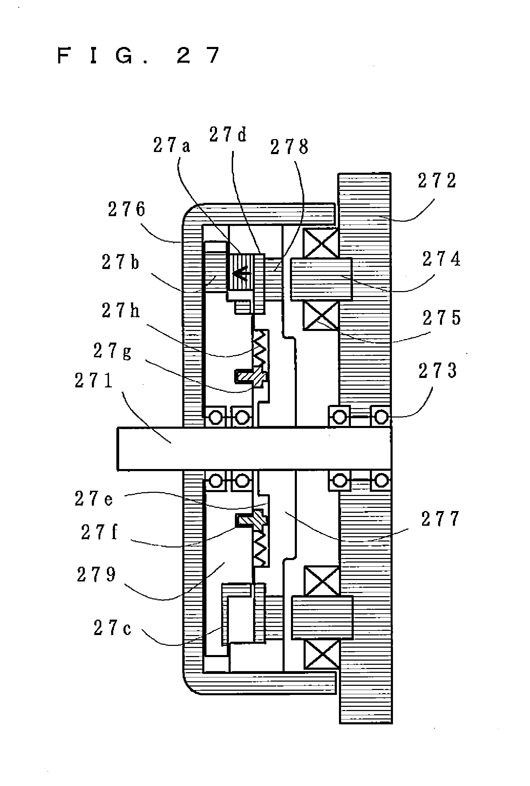

A description will be given of a rotary electric machine system in accordance with a sixth embodiment of the present invention with reference to Figs. 27 to 30. The sixth embodiment is the rotary electric system having a single pole rotor of an axial gap structure. An excitation portion is arranged within the rotor, and controls a magnetic flux amount by a governor mechanism.

Fig. 27 shows an embodiment in which the present invention is applied to a rotary electric machine of an axial gap structure in which a field portion is arranged in a rotating side, and a rotating shaft 271 is rotatably supported to a base plate 272 via a bearing 273. An armature is constructed by a plurality of magnetic teeth 274 extending in an axial direction from the base plate 272 made of an iron, and an armature coil 275 wound around the magnetic material tooth 274. Nine magnetic material teeth 274 and the armature coils 275 are arranged in a circumferential direction around the rotating shaft 271, and the armature coils 275 are connected in three phases.

The rotor is constructed by a surface magnetic pole portion 277 opposed to the magnetic material tooth 274 in an axial direction, a displacement magnetic pole portion 279, and a cup 276, the surface magnetic pole portion 277 and the cup 276 are fixed to the rotating shaft 271, and the displacement magnetic pole portion 279 is rotatably supported to the rotating shaft 271 via a bearing as well as being opposed to the surface magnetic pole portion 277 and the cup 276 via a micro gap. The surface magnetic pole portion 277 is structured such that an annular base magnetic pole 27d is arranged in a resin base plate being non-magnetic and having a great electric resistance, a magnetic material salient pole 278 is arranged in the magnetic material tooth 274 side on the base magnetic pole 27d, and a field magnet 27a is arranged in an opposite side to the magnetic material tooth 274 on the base magnetic pole 27d. Since the alternating current magnetic flux passes through the base magnetic pole 27d, it is structured such that the annular silicone steel plates are laminated.

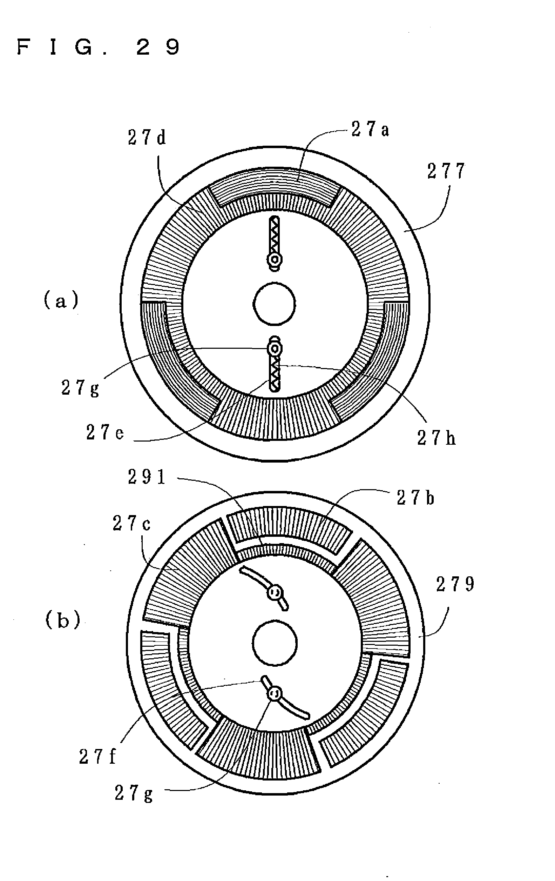

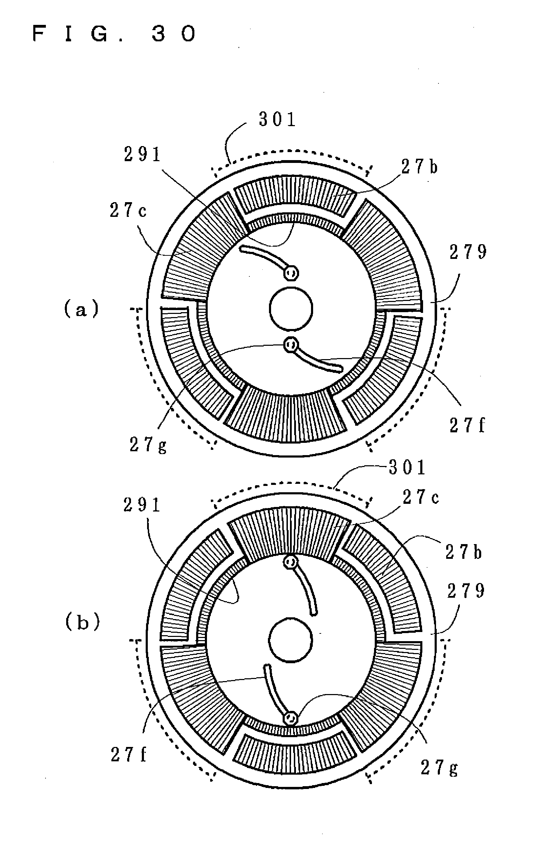

The displacement magnetic pole portion 279 is constructed by a non-magnetic stainless steel, and the main magnetic pole 27b and the bypass magnetic pole 27c are arranged. The cup 276 is constructed by an iron corresponding to a magnetic material, an outer circumferential portion of the cup 276 is structured such as to be opposed to the base plate 272 via a micro gap, and a magnetic flux from the main magnetic pole 27b is structured such as to flow to the base plate 272 made of the iron via the cup 276. The displacement magnetic pole portion 279 rotates together with the rotating shaft 271, the cup 276 and the surface magnetic pole portion 277, and is structured such that a relative displacement amount in a circumferential direction with respect to the rotating shaft 271, the cup 276 and the surface magnetic pole portion 277 is different by utilizing a centrifugal force between a low rotating speed and a high rotating speed. A guide groove 27e and a spring 27h in a diametrical direction provided in the surface magnetic pole portion 277, and a guide groove 27f formed as an arc shape and a weight 27g provided in the displacement magnetic pole portion 279 are a part of a mechanism provided for them, and will be described with reference to Figs. 29(a), 29(b), 30(a) and 30(b).

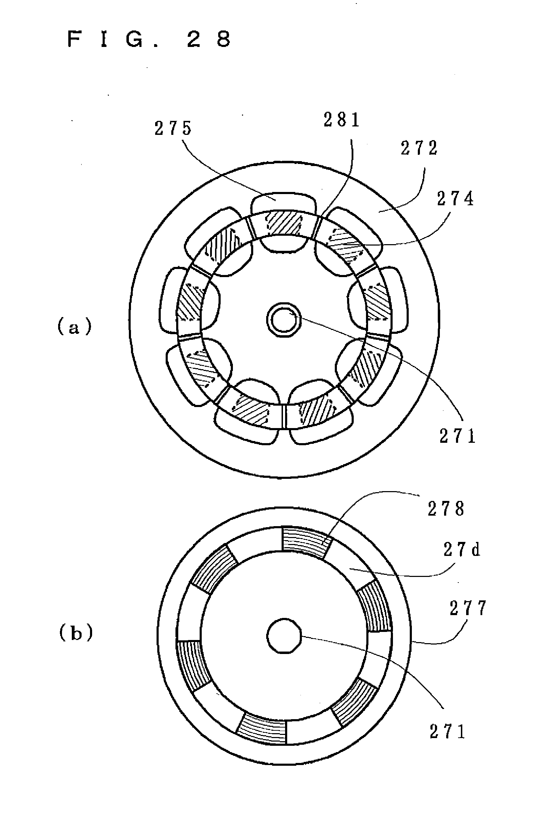

Fig. 28(a) shows a plan view of the armature as seen from the surface magnetic pole portion 277 side, and is shown by attaching reference numerals to a part of the constructing portions for explaining a mutual relationship. The magnetic material tooth 274 has an approximately T-shaped construction, and the armature coil 275 is wound as well as a hatched portion is provided in a rising manner in the base plate 272 made of the steel. It is structured such as to be opposed via a micro gap between the adjacent magnetic material teeth 274 in an opposed surface to the surface magnetic pole portion 277, and reference numeral 281 denotes a magnetic gap portion of the micro gap. The present embodiment has nine magnetic material teeth 274 and armature coils 275, and the armature coils 275 are connected in three phases. The base plate 272 made of the steel forms a part of the main magnetic flux path together with the magnetic material tooth 274.

Fig. 28(b) is a view showing a structure of the surface magnetic pole portion 277 opposed to the magnetic material tooth 274, and shows a plan view in which the surface magnetic pole portion 277 is seen from the magnetic material tooth 274 side. Six magnetic material salient poles 278 are arranged at an equal interval on the annular base magnetic pole 27d arranged on the surface magnetic pole portion 277. The excitation portion is constructed by the surface magnetic pole portion 277 and the displacement magnetic pole portion 279. Fig. 29(a) shows a plan view in which the surface magnetic pole portion 277 is seen from the displacement magnetic pole portion 279 side, and three field magnets 27a are arranged at an equal interval on the base magnetic pole 27d. A magnetization direction of the field magnet 27a is in parallel to the rotating shaft 271 as shown by an arrow in Fig. 27. Fig. 29(b) shows a plan view in which the displacement magnetic pole portion 279 is seen from the cup 276 side, the main magnetic pole 27b and the bypass magnetic pole 27c are opposed to the field magnet 27a via a micro gap, the bypass magnetic pole 27c is connected to the bypass magnetic material 291, and the bypass magnetic material 291 is opposed to the base magnetic pole 27d via a micro gap as shown in Fig. 27 showing its cross section. The main magnetic pole 27b is thicker in the axial direction than the bypass magnetic pole 27c, and is magnetically connected to the cup 276 via a micro gap.

In Figs. 29(a) and 29(b), there is shown a governor mechanism relatively displacing the displacement magnetic pole portion 279 with respect to the cup 276 and the surface magnetic pole portion 277 in correspondence to the rotating speed. The structure is made such that the weight 27g is slidably arranged in the guide groove 27e in the diametrical direction and the arc-shaped guide groove 27f, and the spring 27h arranged within the guide groove 27e energizes the weight 27g to an inner circumferential side. The guide groove 27f is arranged in the surface magnetic pole portion 277 side of the displacement magnetic pole portion 279, however, is shown by a solid line together with the weight 27g in Fig. 29(b) for easily understanding.

A reference position of the weight 27g is a position at a rest time when the centrifugal force does not work, the weight 27g is positioned in an innermost circumference, the centrifugal force in the diametrical direction acting on the weight 27g if the rotating speed is increased, and the spring 27h are pushed each other, and the weight 27g moves to a balanced diametrical position. In this process, the are-shaped guide groove 27f is exposed to the force in the circumferential direction so as to relatively displace the displacement magnetic pole portion 279 with respect to the surface magnetic pole portion 277 and the cup 276. In Fig. 29(b), there is shown an example in which the weight 27g moves slightly to an outer circumferential side from the reference position in the innermost circumference. The displacement of the displacement magnetic pole portion 279 becomes maximum at a point in which the rotating speed is further increased so as to reach a terminal end of the guide groove 27e in the diametrical direction or the arc-shaped guide groove 27f, and a regulating means of the displacement amount of the displacement magnetic pole portion 279 is set by a dimension of the guide groove 27e in the diametrical direction or the arc-shaped guide groove 27f.

Fig. 30(a) shows the main magnetic pole 27b and the bypass magnetic pole 27c at the reference position, Fig. 30(b) shows the main magnetic pole 27b and the bypass magnetic pole 27c which are displaced to the maximum, and a description will be given of a principle of controlling the magnetic flux amount between the magnetic material salient pole 278 and the magnetic material tooth 274 with reference to Figs. 27 to 30. The main magnetic flux path and the bypass magnetic flux path are connected to the field magnet 27a in parallel. The main magnetic flux path is a magnetic flux path flowing back to the other magnetic pole of the field magnet 27a from one magnetic pole of the field magnet 27a via the main magnetic pole 27b, the cup 276, the base plate 272, the magnetic material tooth 274, the magnetic material salient pole 278, and the base magnetic pole 27d, and the bypass magnetic flux path is a magnetic flux path flowing back to the other magnetic pole of the field magnet 27a from one magnetic pole of the field magnet 27a via the bypass magnetic pole 27c, the bypass magnetic material 291, and the base magnetic pole 27d. In the present embodiment, an opposed area and a gap length in the gap between the bypass magnetic material 291 and the base magnetic pole 27d is regulated in such a manner as to set the magnetic resistance of the bypass magnetic flux path to be approximately equal to the magnetic resistance of the main magnetic flux path, in the average operating condition of the rotary electric machine.

The respective opposed areas between the magnetic pole magnet 27a, and the main magnetic pole 27b and the bypass magnetic pole 27c are changed in accordance with the relative displaces of the main magnetic pole 27b and the bypass magnetic pole 27c, and a sum of the opposed areas is constant. The magnetic flux from the field magnet 27a is shunted to the main magnetic pole 27b and the bypass magnetic pole 27c in correspondence to the respective opposed areas. In the present embodiment, since the magnetic resistances of the main magnetic flux path and the bypass magnetic flux path are set to be approximately equal to each other, the magnetic flux total amount from the field magnet 27a is constant, and the magnetic force against the displacement is suppressed.

In Figs. 30(a) and 30(b), a dotted line 301 indicates a position in a circumferential direction of the field magnet 27a. Since the centrifugal force does not act on the weight 27g at the rest time, it is pushed into the reference position in the innermost circumference by the spring 27h, the opposed area between the main magnetic pole 27b and the field magnet 27a is maximum, and the maximum magnetic flux flows between the magnetic material salient pole 278 and the magnetic material tooth 274. In Fig. 30(b), the rotating speed is high, and the centrifugal force acting on the weight 27g overcomes the energizing force to the inner circumference of the spring 27h so as to move the weight 27g to an outermost circumferential portion of the guide groove 27f or the guide groove 27e, maximizes the displacement amount of the main magnetic pole 27b and the bypass magnetic pole 27c with respect to the field magnet 27a so as to minimize the opposed area between the main magnetic pole 27b and the field magnet 27a, and minimizes the magnetic flux flowing between the magnetic material salient pole 278 and the magnetic material tooth 274.

In accordance with the present embodiment, there is shown the matter that the magnetic flux amount interlinking to the armature coil 275 can be controlled by displacing the main magnetic pole 27b and the bypass magnetic pole 27c with respect to the field magnet 27a in correspondence to the rotating speed. Since the magnetic force preventing the displacement at a time of displacing the main magnetic pole 27b and the bypass magnetic pole 27c can be held down, it is possible to smoothly control. The relationship between the rotating speed and the displacement amount mentioned above depends on the data of the weight 27g and the spring 27h, the shape of the guide groove 27f and the like. The magnetic flux amount control interlinking to the armature coil 275 by utilizing the centrifugal force such as the present embodiment has a disadvantage of lacking an accuracy, however, has an advantage that any specific control device is not necessary on the basis of a simple mechanism.

### Embodiment 7

A description will be given of a rotary electric machine system in accordance with a seventh embodiment of the present invention with referenced to Fig. 31. The seventh embodiment is a rotary electric machine system in which the rotary electric machine system in accordance with the third embodiment is used as a generator doubling as an electric motor system of a hybrid car.

In the drawing, reference numeral 311 denotes a rotary electric machine shown in the third embodiment, the rotary electric machine 311 has a rotating shaft 319 connected to an engine 312 of the hybrid car by a belt so as to transmit a rotating force, and the rotating force of the rotating shaft 319 is transmitted to a drive shaft 31a via a transmission 313. A control device 314 receives a command 31b from a superior control apparatus, drives the rotary electric machine 311 as an electric motor via a drive circuit 315, and controls a magnetic flux amount flowing into the armature via a magnetic flux amount control circuit 316. Further, the control device 314 is structured such as to receive the command 31b from the superior control device, rectify a generated power appearing in a leader line 31c of the armature coil 76 via a rectifying circuit 317, and charge a battery 318. The control device 314 drives the rotary electric machine 311 as an electric motor via the drive circuit 315 on the basis of an instruction of the command 31b, assists a rotation of the engine 312 or rotationally drives a rotating shaft 319 by itself, and contributes to a driving force of the hybrid car via the transmission 313 and the drive shaft 31a.

In the case that it is necessary to reinforce a magnet torque in a low rotating speed region, the control device 314 feeds a minimum magnetic force current to the armature coil 76 via the drive circuit 315 in a time zone of a magnetic flux amount control section 152 so as to effectively equalize the magnetic resistances of the main magnetic flux path and the bypass magnetic flux path to each other, and enlarges the opposed area between the main magnetic pole 115 and the field magnet 114 by displacing the push rod 11e in a rightward direction by the actuator 11f in such a manner as to enlarge the magnetic flux amount between the magnetic material tooth 74 of the armature, and the magnetic material salient poles 121 and 122 via the magnetic flux amount control circuit 316. In the case of the weakening field in a high rotating speed region, the control device 314 feeds the minimum magnetic force current to the armature coil 76 via the drive circuit 315 in the time zone of the magnetic flux amount control section 152 so as to effectively equalize the magnetic resistances of the main magnetic flux path and the bypass magnetic flux path, and reduces the opposed area between the main magnetic pole 115 and the field magnet 114 by displacing the push rod 11e in a leftward direction by the actuator 11f in such a manner as to reduce the magnetic flux amount between the magnetic material tooth 74 of the armature, and the magnetic material salient poles 121 and 122 via the magnetic flux amount control circuit 316.

When it is possible to drive the hybrid car only by the rotating force of the engine 312, the generated power appearing in the leader line 31c of the armature coil 76 is converted into a direct current via the rectifying circuit 317 on the basis of the command 31b, and the battery 318 is charged. In this case, the control device 314 feeds the minimum magnetic force current to the armature coil 76 via the drive circuit 315 in the time zone of the magnetic flux amount control section 152 so as to effectively equalize the magnetic resistances of the main magnetic flux path and the bypass magnetic flux path, and controls the actuator 11f via the magnetic flux amount control circuit 316 in such a manner as to come to an optimum voltage charging the battery 318. A converter converting the generated voltage is not necessary by setting the rotary electric machine system to the constant voltage generator system in the case of charging the battery 318. Further, even in the case that the battery 318 is constructed by plural kinds of batteries having different kinds of electric voltages, an expensive converter can be made unnecessary by attaching a switch circuit so as to control the generated voltage which is optimum for the respective battery.

The present embodiment effectively serves as an energy recovery system at a time of braking the hybrid car. When receiving an instruction for regenerative braking through the command 31b, the control device 314 feeds the minimum magnetic force current to the armature coil 76 via the drive circuit 315 in the time zone of the magnetic flux amount control section 152 so as to effectively equalize the magnetic resistances of the main magnetic flux path and the bypass magnetic flux path, displaces the push rod 11e in the rightward direction by the actuator 11f in such a manner as to enlarge the magnetic flux amount between the magnetic material tooth 74 of the armature, and the magnetic material salient poles 121 and 122 of the rotor via the magnetic flux amount control circuit 316 so as to enlarge the opposed area between the main magnetic pole 115 and the field magnet 114, and charges the battery 318 by the generated power. In the case of having a plurality of batteries 318, the magnetic flux amount between the magnetic material tooth 74, and the magnetic material salient poles 121 and 122 of the rotor is controlled by controlling the actuator 11f via the magnetic flux amount control circuit 316 in such a manner that the generated voltage in conformity to the charging voltage of the battery 318 having a highest charging surplus capacity can be obtained. Since the rotary electric machine 311 has such a physical constitution as to be used as the generator for driving, it can generate a sufficient braking force as the generator for the regenerative braking.

The seventh embodiment is the rotary electric machine system in which the present invention is used as the electric motor doubling as the generator for the hybrid car, however, may be of course a rotary electric machine system in an electric vehicle. In this case, the engine 312 of the hybrid car is removed in the embodiment mentioned above, and the energy recovery system at a time of braking is constructed driving the electric vehicle only by the rotary electric machine system in accordance with the present invention.

The description is given above of the rotary electric machine system in accordance with the present invention by listing up the embodiments. These embodiments show the examples achieving the points and the purposes of the present invention, and do not limit the scope of the present invention. For example, in the embodiments mentioned above, the armature is shown as the structure having the magnetic material tooth, however, the structure example in which the magnetic material tooth is not arranged exists in the rotary electric machine of the conventional axial gap structure. Further, the example in which the magnetic material tooth is not provided by arranging the armature coil in which the armature structure is print wired on a cylindrical magnetic yoke also exists in the radial gap structure. The present invention can be applied regardless of with or without the magnetic material tooth, and it is possible to employ the optimum armature structure in accordance with the specification of the rotary electric system. It is matter of course that the system achieving the point and the purpose of the present invention can be completed by combining the embodiments mentioned above or combining the parts of the embodiments.

### INDUSTRIAL APPLICABILITY

In the rotary electric machine system of the permanent magnet excitation, the structure is made such as to feed the magnetic flux in a lump to the magnetic material salient pole excited to the same kind of magnetization from the excitation portion, and the magnetic flux amount flowing into the armature side is controlled by displacing a part of the excitation portion. The magnetic flux amount can be easily controlled by making the force necessary for the displacement small. The rotary electric machine system to which the present invention is applied can enlarge the practicable rotating speed range, can further improve the power generating function and can control the power generating function, in addition that it can be utilized as the electric motor having the high output in the same manner as the conventional rotary electric machine. In the case of use in the electric motor system doubling as the generator of a movable body, it is possible to improve a comprehensive energy consumption by enabling an energy recovery at a time of braking in addition that it is possible to expect a use in the larger rotating speed range than the conventional one as the electric motor for driving. Further, since the generated voltage can be controlled fixedly in the wide rotating speed range as the constant voltage generator system, the constant voltage control circuit is not necessary, the converter can be made unnecessary for charging the plural kinds of batteries having the different electric voltages, and it is possible to reduce a whole system cost.

## Claims

1. A rotary electric machine system comprising a rotary electric machine device having an armature including an armature coil, a surface magnetic pole portion including a plurality of magnetic material salient poles which are arranged in a circumferential direction while being opposed to the armature, and an excitation portion magnetizing in a lump per a magnetic material salient pole group to be magnetized to the same kind of polarity, and the surface magnetic pole portion and the armature being relatively rotatable around an axis, **characterized in that** the excitation portion has a field magnet, a main magnetic pole and a bypass magnetic pole, the main magnetic pole and the bypass magnetic pole are arranged so as to be opposed to a first field magnetic pole on the assumption that any one magnetic pole of an N pole and an S pole of the field magnet is the first field magnetic pole and the other magnetic pole is a second field magnetic pole, a main magnetic flux path in which a magnetic flux flowing into the main magnetic pole from the first field magnetic pole flows back to the second field magnetic pole via the magnetic material salient pole and the armature, and a bypass magnetic flux path in which a magnetic flux flowing into the bypass magnetic pole from the first field magnetic pole flows back to the second field magnetic pole mainly within the excitation portion are connected to the field magnet in parallel, any of a unit of the main magnetic pole and the bypass magnetic pole and the field magnet serves as a movable magnetic pole portion, the movable magnetic pole portion is structured such as to be relatively displaced with respect to a remainder in such a manner as to change each of an area in which the first field magnetic pole is opposed to the main magnetic pole and an area in which the first field magnetic pole is opposed to the bypass magnetic pole while a sum of said areas are kept constant, and the movable magnetic pole portion is displaced in correspondence to an output of the rotary electric machine system in such a manner that said output is optimized, whereby a magnetic flux amount flowing in the main magnetic flux path is controlled.

2. The rotary electric machine system according to claim 1, **characterized in that** a minimum magnetic force condition is set such that a magnetic resistance of the bypass magnetic flux path is approximately equal to a magnetic resistance of the main magnetic flux path in such a manner as to make a force preventing the displacement of the movable magnetic pole portion small.

3. The rotary electric machine system according to claim 1, **characterized in that** the bypass magnetic flux path including the bypass magnetic pole is structured such as to include a material having a greater eddy current loss than the magnetic material salient pole in such a manner that an alternating current magnetic flux is hard to pass.

4. The rotary electric machine system according to claim 1, **characterized in that** the magnetic flux path from the field magnet to the magnetic material salient pole is structured such as to include a material having a greater eddy current loss than the magnetic material salient pole in such a manner that an alternating current magnetic flux is hard to pass.

5. The rotary electric machine system according to claim 1, **characterized in that** a magnetic resistance between the main magnetic flux path and the bypass magnetic flux path is structured such as to become larger than a difference between the magnetic resistance of the main magnetic flux path and the magnetic resistance of the bypass magnetic flux path.

6. The rotary electric machine system according to claim 1, **characterized in that** the field magnet and a non-magnetic material portion are arranged alternately in a circumferential direction, in the excitation portion, the main magnetic pole and the bypass magnetic pole are arranged side by side in the circumferential direction so as to be opposed to the first field magnetic pole of each of the field magnets, and the unit of the main magnetic pole and the bypass magnetic pole and the field magnet are structured such as to be relatively displaced in the circumferential direction.

7. The rotary electric machine system according to claim 1, **characterized in that** the main magnetic pole and the bypass magnetic pole are arranged side by side in an axial direction so as to be opposed to the first field magnetic pole of the field magnet, in the excitation portion, and the unit of the main magnetic pole and the bypass magnetic pole and the field magnet are structured such as to be relatively displaced in the axial direction.

8. The rotary electric machine system according to claim 1, further comprising a magnetic resistance regulating means for regulating a magnetic resistance of the main magnetic flux path or the bypass magnetic flux path, **characterized in that** the magnetic resistance of the main magnetic flux path or the bypass magnetic flux path is regulated in such a manner as to make a force necessary for displacing the movable magnetic pole portion small.

9. The rotary electric machine system according to claim 8, **characterized in that** the magnetic resistance of the bypass magnetic flux path and the magnetic resistance of the main magnetic flux path are regulated by the magnetic resistance regulating means at a time of displacing the movable magnetic pole portion in such a manner as to become approximately equal to a minimum magnetic force condition.

10. The rotary electric machine system according to claim 8, **characterized in that** the magnetic resistance of the main magnetic flux path is regulated by the magnetic resistance regulating means in such a manner as to become smaller than the magnetic resistance of the bypass magnetic flux path at a time of increasing the magnetic flux amount flowing in the armature, the magnetic resistance of the main magnetic flux path is regulated by the magnetic resistance regulating means in such a manner as to become larger than the magnetic resistance of the bypass magnetic flux path at a time of reducing the magnetic flux amount flowing in the armature, and the movable magnetic pole portion is simultaneously displaced.

11. The rotary electric machine system according to claim 8, further comprising a magnetic force detecting means for detecting a magnetic force applied to the movable magnetic pole portion on the basis of the magnetic resistances of the main magnetic flux path and the bypass magnetic flux path being deflected from the minimum magnetic force condition, **characterized in that** a relationship between a parameter relating to an intermittently changed magnetic resistance regulating means, or said parameter changing during a normal operation and said magnetic force is monitored, and said parameter reducing said magnetic force is set as a minimum magnetic force condition parameter.

12. The rotary electric machine system according to claim 8, **characterized in that** the magnetic resistance regulating means is constructed by a gap length regulating means regulating a gap length in a gap arranged within the bypass magnetic flux path, and the magnetic resistance of the bypass magnetic flux path is regulated in such a manner as to make a force necessary for displacing the movable magnetic pole portion small.

13. The rotary electric machine system according to claim 8, **characterized in that** the magnetic resistance regulating means is constructed by a magnetic resistance regulating coil wound around the bypass magnetic flux path, and the magnetic resistance of the bypass magnetic flux path is regulated by feeding a predetermined electric current to the magnetic resistance regulating coil in such a manner as to make a force necessary for displacing the movable magnetic pole portion small.

14. The rotary electric machine system according to claim 8, **characterized in that** the magnetic resistance regulating means is constructed by a means for regulating the magnetic resistance of the main magnetic flux path by feeding a predetermined electric current in a direction of accelerating or decelerating the rotor to the armature coil, and the magnetic resistance of the main magnetic flux path is effectively regulated by feeding a predetermined electric current to the armature coil in such a manner as to make a force necessary for displacing the movable magnetic pole portion small at a time of displacing the movable magnetic pole portion.

15. The rotary electric machine system according to claim 8, **characterized in that** the magnetic resistance regulating means is constructed by a predetermined constant current load, the constant current load is connected to the armature coil at a time of displacing the movable magnetic pole portion, a predetermined electric current is applied on the basis of an induced voltage in such a manner as to make a force necessary for said displacement of the movable magnetic pole portion small, and the magnetic resistance of the main magnetic flux path is effectively regulated.

16. The rotary electric machine system according to claim 1, further comprising a displacement regulating means of the movable magnetic pole portion, **characterized in that** a relative displacement amount of the movable magnetic pole portion is regulated within a range in which each of an area in which the first field magnetic pole of the field magnet is opposed to the main magnetic pole and an area in which the first field magnetic pole is opposed to the bypass magnetic pole is changed while a sum of the areas are kept constant.

17. The rotary electric machine system according to claim 1, further comprising a means for keeping a displacement position of the movable magnetic pole portion, **characterized in that** magnetic flux amount flowing in the armature is intermittently controlled.

18. The rotary electric machine system according to claim 1, **characterized in that** the armature further includes a magnetic yoke which is arranged so as to go around the shaft, the surface magnetic pole portion has a magnetic material salient pole and a non-magnetic material portion which are arranged in the rotor side and are arranged alternately in the circumferential direction so as to be opposed to the armature, and the excitation portion is arranged in such a manner as to magnetize the magnetic material salient pole to the same polarity.

19. The rotary electric machine system according to claim 1, **characterized in that** the surface magnetic pole portion and the armature are arranged so as to be opposed in a diametrical direction, two rotors constructed by the surface magnetic pole portions in which the magnetic material salient pole and the non-magnetic material portion are arranged alternately in the circumferential direction so as to be opposed to the armature are arranged in an axial direction in such a manner that the other non-magnetic material portion corresponds to one magnetic material salient pole to each other, thereby forming a first rotor and a second rotor, and the excitation portion is arranged in such a manner as to magnetize the respective magnetic material salient poles of the first rotor and the second rotor to different poles from each other.

20. The rotary electric machine system according to claim 1, **characterized in that** the surface magnetic pole portion has a magnetic material salient pole and a non-magnetic material portion which are arranged alternately in the circumferential direction in the opposed surface to the armature, and the excitation portion is arranged in such a manner as to magnetize the adjacent magnetic material salient poles to different poles from each other.

21. The rotary electric machine system according to claim 1, **characterized in that** the surface magnetic pole portion has magnetic material salient poles which are arranged alternately in the circumferential direction in the opposed surface to the armature and a permanent magnet having a magnetization in an approximately circumferential direction, the permanent magnets which are adjacent in such a manner as to magnetize the adjacent magnetic material salient poles in an inverse direction to each other are arranged so as to inverse the magnetizations to each other, and the excitation portion is arranged in such a manner that polarities which the excitation portion and the permanent magnet magnetize the magnetic material salient poles become identical.

22. The rotary electric machine system according to claim 1, **characterized in that** an assembled permanent magnet is set to an equivalent permanent magnet in which permanent magnet plates having approximately the same magnetization in a circumferential direction are arranged in both side surfaces of the magnetic material, the surface magnetic pole portion has the magnetic material salient pole and the assembled permanent magnet which are arranged alternately in the circumferential direction in a surface opposed to the armature, the assembled permanent magnets which are adjacent in such a manner as to magnetize the adjacent magnetic material salient poles to inverse direction to each other are arranged so as to inverse the magnetization directions to each other, and the excitation portion is arranged in such a manner that the polarities which the excitation portion and the assembled permanent magnet magnetize the magnetic material salient poles become identical.

23. The rotary electric machine system according to claim 1, **characterized in that** the surface magnetic pole portions arranged in the armature and the rotor side are arranged so as to be opposed in a diametrical direction, the adjacent magnetic material salient poles are extended to different directions which are in parallel to the axis from each other, the extension portions are set to a first extension portion and a second extension portion in accordance with the extending directions, and the excitation portion is arranged within the rotor in such a manner that the adjacent magnetic material salient poles via the first extension portion and the second extension portion are magnetized to different poles from each other.

24. The rotary electric machine system according to claim 1, **characterized in that** the surface magnetic pole portions arranged in the armature and the rotor side are arranged so as to be opposed in a diametrical direction, the armature further has a magnetic yoke, the adjacent magnetic material salient poles are extended to different directions from each other in an axial direction, the extension portions are set to a first extension portion and a second extension portion in accordance with the extending directions, two excitation portions arranged in a rest side in both ends of the rotor feed the magnetic flux between the first extension portion and the magnetic yoke, and between the second extension portion and the magnetic yoke, and the adjacent magnetic material salient poles are magnetized to different poles from each other.

25. The rotary electric machine system according to claim 1, **characterized in that** the surface magnetic pole portions arranged in the armature and the rotor side are arranged so as to be opposed in a diametrical direction, the adjacent magnetic material salient poles are extended to different directions from each other in an axial direction and a diametrical direction, the extension portions are set to a first extension portion and a second extension portion in accordance with the extending directions, the excitation portion arranged in a rest side in an end of the rotor feed the magnetic flux between the first extension portion and the second extension portion, and the adjacent magnetic material salient poles are magnetized to different poles from each other.

26. The rotary electric machine system according to claim 1, further comprising a control device, and having a rotating force as an input and a generated power as an output, **characterized in that** the movable magnetic pole portion is displaced so as to make an area in which the first field magnetic pole and the main magnetic pole are opposed small at a time when a generated voltage induced by the armature coil is larger than a predetermined value, and the movable magnetic pole portion is displaced so as to make the area in which the first field magnetic pole and the main magnetic pole are opposed large at a time when the generated voltage is smaller than the predetermined value, whereby the generated voltage is controlled to the predetermined value, by means of the control device.

27. The rotary electric machine system according to claim 1, further comprising a control device, and having an electric current fed to the armature coil as an input and a rotating force as an output, **characterized in that** the movable magnetic pole portion is displaced so as to make an area in which the first field magnetic pole and the main magnetic pole are opposed small at a time when a rotating speed is larger than a predetermined value so as to reduce a magnetic flux amount flowing in the armature, and the movable magnetic pole portion is displaced so as to make the area in which the first field magnetic pole and the main magnetic pole are opposed large at a time when the rotating speed is smaller than the predetermined value so as to increase the magnetic flux amount flowing in the armature, whereby the rotating force is appropriately controlled, by means of the control device.

28. The rotary electric machine system according to claim 1, further comprising a control device, and having an electric current fed to the armature coil as an input and a rotating force as an output, **characterized in that** the movable magnetic pole portion is displaced by the control device so as to make a magnetic flux amount flowing in the armature large in the case of reducing the rotating speed, whereby an area in which the first field magnetic pole and the main magnetic pole are opposed is enlarged, and a rotational energy is picked up as a generated power.

29. A magnetic flux amount control method of controlling a magnetic flux amount flowing in an armature of a rotary electric machine having an armature including an armature coil, a surface magnetic pole portion including a plurality of magnetic material salient poles which are arranged in a circumferential direction while being opposed to the armature, and an excitation portion magnetizing in a lump per a magnetic material salient pole group to be magnetized to the same kind of polarity, and the surface magnetic pole portion and the armature being rotatable relatively around an axis, comprising the steps of connecting a main magnetic flux path by which a magnetic flux flowing into the main magnetic pole from one magnetic pole of the field magnet flows back to the other magnetic pole of the field magnet via the magnetic material salient pole and the armature, and a bypass magnetic flux path by which a magnetic flux flowing into the bypass magnetic flux path from one magnetic pole of the field magnet flows back to the other magnetic pole of the field magnet mainly within the excitation portion in parallel to the field magnet, and setting any of a unit of the main magnetic pole and the bypass magnetic pole and the field magnet to a movable magnetic pole portion so as to displace the movable magnetic pole portion in such a manner as to change each of an area in which the field magnet is opposed to the main magnetic pole and an area in which the field magnet is opposed to the bypass magnetic pole while keeping a sum of the area constant.

30. The magnetic flux amount control method according to claim 29, further comprising the steps of setting to a minimum magnetic force condition in which a magnetic resistance of the bypass magnetic flux path is approximately equal to a magnetic resistance of the main magnetic flux path in such a manner as to make a force preventing the displacement of the movable magnetic pole portion small.

31. The magnetic flux amount control method according to claim 29, further comprising a magnetic resistance regulating means for regulating a magnetic resistance of the main magnetic flux path or the bypass magnetic flux path, and comprising the steps of regulating the magnetic resistance of the main magnetic flux path or the bypass magnetic flux path in such a manner as to make a force necessary for displacing the movable magnetic pole portion small.

32. The magnetic flux amount control method according to claim 31, further comprising the steps of regulating the magnetic resistance of the bypass magnetic flux path and the magnetic resistance of the main magnetic flux path so as to be approximately equal to the minimum magnetic force condition by the magnetic resistance regulating means at a time of displacing the movable magnetic pole portion.

33. The magnetic flux amount control method according to claim 31, further comprising the steps that the magnetic resistance regulating means regulates such that the magnetic resistance of the main magnetic flux path becomes smaller than the magnetic resistance of the bypass magnetic flux path at a time of increasing the magnetic flux amount flowing in the armature, and the magnetic resistance regulating means regulates such that the magnetic resistance of the main magnetic flux path becomes larger than the magnetic resistance of the bypass magnetic flux path at a time of reducing the magnetic flux amount flowing in the armature, and simultaneously the movable magnetic pole portion is displaced.

34. The magnetic flux amount control method according to claim 31, further comprising a detecting means of a magnetic force applied to the movable magnetic pole portion on the basis of the magnetic resistances of the main magnetic flux path and the bypass magnetic flux path being deflected from the minimum magnetic force condition, and comprising the steps of monitoring a relationship between a parameter relating to an intermittently changed magnetic resistance regulating means, or said parameter changing during a normal operation and the magnetic force applied to the movable magnetic pole portion, and setting said parameter making the magnetic force applied to the movable magnetic pole portion small as a minimum magnetic force condition parameter.
